# EUROPEAN PATENT SPECIFICATION

(11) **EP 3 000 328 B1**
(45) Date of publication and mention of the grant of the patent: **17.04.2019**
(21) Application number: 14801558.9
(22) Date of filing: 19.05.2014
(51) Int. Cl.: A23D 9/007, A23L 33/115, A23C 9/152, C11B 5/00

(54) **FAT COMPOSITION**
FETTZUSAMMENSETZUNG
COMPOSITION DE MATIERE GRASSE

(30) Priority: 20.05.2013 JP 2013106203; 20.05.2013 JP 2013106204
(43) Date of publication of application: 30.03.2016
(73) Proprietor: Kao Corporation, Chuo-Ku Tokyo 103-8210 (JP)
(72) Inventor: MATSUDA, Yuumi, Tokyo 131-8501 (JP); HOMMA, Rika, Tokyo 131-8501 (JP)
(74) Representative: Hoffmann Eitle
(86) International application number: PCT/JP2014/063232
(87) International publication number: WO 2014/189011

(56) References cited:
- WO-A1-2010/149759
- JP-A- H05 153 932
- JP-A- H06 500 594
- JP-A- H07 236 418
- JP-A- H07 236 418
- JP-A- 2004 505 168
- US-A1- 2010 178 369
- YUSHI KAGAKU BENRAN 1990, page 111, XP008181475

## Description

### Field of the Invention

The present invention relates to a fat or oil composition.

### Background of the Invention

In recent years, with increasing interests in maintenance and enhancement of health and prevention and treatment of diseases, many investigations have been made on physiological functions of fish oil and of eicosapentaenoic acid (C20:5, EPA) and docosahexaenoic acid (C22:6, DHA), which are constituent components of the fish oil. Specifically, an anti-atherogenic action, a cerebral function improving action, a visual function improving action, an anti-tumor action, an anti-inflammatory action, and the like have been reported (Non Patent Document 1). In 2005, the Japanese Ministry of Health, Labour and Welfare defined a recommended total intake (adult) of DHA and EPA of 1 g/day, and use of a DHA and EPA-rich fat or oil has been desired.

On the other hand, a highly-unsaturated fatty acid-rich fat or oil has very low oxidative stability and is liable to produce deterioration odor and unpleasant odor/taste, and hence practical realization thereof is significantly restricted.

As technologies for improving oxidative stability of a fat or oil, there has been known, for example, a method involving adding a roasted sesame oil, an ascorbic acid ester, and an herb extract to a fat or oil containing a polyunsaturated fatty acid to stabilize the fat or oil (Patent Document 1). Further, there have been known a lipophilic antioxidant containing, for example, a bayberry extract and a rosemary extract (Patent Document 2), a lipophilic antioxidant containing gallic acid, a water-soluble antioxidant, and an oil-soluble antioxidant (Patent Document 3), and an antioxidant composition including an acetone extract of tea leaves togheter with a tocopherol, and an ascorbic acid ester (Patent Document 4). In addition, the rosemary extract has been known to have a high antioxidative property (Non Patent Document 2), an antioxidant including a rosemary extract that includes hexanal, carnosol, and carnosic acid in specified amounts (Patent Document 5), and the like have been reported.

US 2010/178369 A1 relates to an antioxidant-stabilized composition containing at least one omega 3 polyunsaturated fatty acid (PUFA). The omega 3 PUFA may include eicosapentanoic acid, docosahexaneoic acid and combinations thereof. The compositions additionally contain an antioxidant package made from a mixture of: at least one form of vitamin E; ascorbyl palmitate; rosemary extract; and grape seed oil. The document further relates to a method of increasing the oxidative stability of concentrated fish oil.

JP H07-236418 A describes an antioxidant smell correcting agent for docosahexaenoic acid and enicosapentaenoic acid containing at least two from among labiate, myrtaceous and lauraceous spices (rosemary, clove, cinnamon, oregano, sage, etc.) and their extracts, capable of deodorizing a fish-like smell by adding the agent to DHA, EPA or a fish oil containing DHA or EPA.. The prepared smell correcting agent is said to have anti-oxidizing properties and preventing effect on an oxidation smell.

WO 2010/149759 A1 relates to microparticles comprising a docosahexaenoic acid moiety having a low content of saturated fatty acid moieties and a low content of free surface fat.

### Citation List

### Patent Document

[Patent Document 1] JP-A-H02-189394
[Patent Document 2] JP-A-2007-185138
[Patent Document 3] JP-A-2002-142673
[Patent Document 4] JP-A-H02-55785
[Patent Document 5] JP-A-2004-204212

### Non Patent Document

[Non Patent Document 1] "Journal of Japan Oil Chemists' Society", 1999, Vol. 48, p. 1017
[Non Patent Document 2] "Agric. Food Chem.", 1996, Vol. 44, No. 1, p. 131-135

### Summary of the Invention

The present invention provides a fat or oil composition, comprising the following components (A), (B), and (C1):
(A) a fat or oil in which a total content of eicosapentaenoic acid and docosahexaenoic acid in constituent fatty acids of the fat or oil is from 0.1 to 20 mass% with respect to total constituent fatty acids of the fat or oil;
(B) a rosemary extract at a content of from 0.005 to 0.25 mass%; and
(C1) a thyme extract, a basil extract, or a combination thereof at a content of from 0.00001 to 0.0025 mass%,
wherein a ratio (content mass ratio) of the content of the component (C1) to the content of the rosemary extract as the component (B), [(C1)/(B)], is from 0.0003 to 0.08.

The present invention provides a formulated milk powder, comprising: the fat or oil composition; and at least one component selected from the group consisting of lactose, whey protein, casein, and milk phospholipid.

The present invention provides a fat or oil composition, comprising the following components (A), (B), and (C2):
(A) a fat or oil in which a total content of eicosapentaenoic acid and docosahexaenoic acid in constituent fatty acids of the fat or oil is from 0.1 to 20 mass% with respect to total constituent fatty acids of the fat or oil;
(B) a rosemary extract at a content of from 0.005 to 0.25 mass%; and
(C2) at least one selected from the group consisting of a clove extract, an oregano extract, and a bay laurel extract at a content of from 0.00001 to 0.001 mass%
wherein a ratio (content mass ratio) of the content of the component (C2) to the content of the rosemary extract as the component (B), [(C2)/(B)], is from 0.0001 to 0.03.

### Detailed Description of the Invention

However, the technologies described above have a problem that degradation odor is liable to be produced because of an insufficient antioxidative property at the time of heating. Also, a plant extract, in particular, a rosemary extract has an excellent antioxidative property but has very strong flavor, and hence original taste and flavor of a cooked food is hardly sensed when a fat or oil containing the rosemary extract is used for cooking. Therefore, the amount of the fat or oil to be added is inevitably restricted, and it is difficult to improve oxidative stability of the fat or oil. Similarly, when the flavor of rosemary is to be avoided for product designing as well, the use of the rosemary extract is restricted.

Therefore, the present invention relates to providing a fat or oil composition having high oxidative stability while containing large amounts of eicosapentaenoic acid and docosahexaenoic acid, and having suppressed degradation odor and unpleasant odor derived from a rosemary extract at the time of cooking.

The inventors of the present invention made intensive investigations. As a result, the inventors found that incorporation of a combination of a rosemary extract and a specific plant extract into a fat or oil was able to impart high oxidative stability, to suppress degradation odor at the time of cooking, and to suppress strong odor derived from rosemary, to thereby provide a fat or oil composition enabling good taste and flavor of a cooked food or the like to be sensed.

According to the present invention, there is provided a fat or oil composition that has high oxidative stability while containing large amounts of eicosapentaenoic acid and docosahexaenoic acid, has degradation odor and strong unpleasant odor derived from rosemary at the time of cooking both suppressed, and is capable of providing a cooked food excellent in taste and flavor. Further, it is possible to provide a formulated milk powder having excellent oxidative stability and containing large amounts of eicosapentaenoic acid and docosahexaenoic acid by using the fat or oil composition of the present invention.

A content of a fat or oil as a component (A) of the present invention in the fat or oil composition is preferably from 95 to 99.95 mass% (hereinafter simply referred to as "%"), more preferably from 97 to 99%, from the viewpoint of the use thereof.

In the constituent fatty acids of the fat or oil as the component (A) to be used in the present invention, the total content of eicosapentaenoic acid and docosahexaenoic acid with respect to total constituent fatty acids of the fat or oil is 0.1% or more and 20% or less, that is, from 0.1 to 20%, and is preferably 0.3% or more, more preferably 1% or more, even more preferably 2% or more, from the viewpoint of physiological effects. Further, the total content of eicosapentaenoic acid and docosahexaenoic acid is preferably 15% or less, more preferably 10% or less, more preferably 7% or less, even more preferably 5% or less, from the viewpoint of oxidative stability. The total content of eicosapentaenoic acid and docosahexaenoic acid in the constituent fatty acids of the fat or oil as the component (A) with respect to total constituent fatty acids of the fat or oil is preferably from 0.1 to 15%, more preferably from 0.3 to 10%, more preferably from 1 to 7%, even more preferably from 2 to 5%, from the viewpoints of both physiological effects and oxidative stability. It should be noted that the amount of a fatty acid herein refers to an amount obtained by converting it to a free fatty acid.

The constituent fatty acids of the fat or oil as the component (A) other than eicosapentaenoic acid and docosahexaenoic acid are not particularly limited, and may be any of saturated fatty acids and unsaturated fatty acids. The content of the unsaturated fatty acids in the constituent fatty acids of the fat or oil other than eicosapentaenoic acid and docosahexaenoic acid is preferably from 60 to 100%, more preferably from 70 to 100%, more preferably from 75 to 100%, even more preferably from 80 to 98%, from the viewpoints of appearance and the industrial productivity of the fat or oil. The carbon numbers of the unsaturated fatty acids are preferably from 14 to 24, more preferably from 16 to 22, from the viewpoint of physiological effects.

In addition, the content of the saturated fatty acids of the constituent fatty acids of the fat or oil as the component (A) is preferably 40% or less, more preferably 30% or less, more preferably 25% or less, even more preferably 20% or less. Further, the content is preferably 0.5% or more, from the viewpoint of the industrial productivity of the fat or oil. The carbon numbers of the saturated fatty acids are preferably from 14 to 24, more preferably from 16 to 22.

In the present invention, substances constituting the fat or oil as the component (A) include monoacylglycerols and diacylglycerols as well as triacylglycerols. That is, the fat or oil as the component (A) in the present invention contains any one or more of monoacylglycerols, diacylglycerols, and triacylglycerols.

The content of the triacylglycerols in the fat or oil as the component (A) is preferably from 78 to 100%, more preferably from 88 to 100%, more preferably from 90 to 99.5%, even more preferably from 92 to 99%, from the viewpoint of the industrial productivity of the fat or oil.

Further, the content of the diacylglycerols in the fat or oil as the component (A) is preferably 19% or less, more preferably 9% or less, more preferably from 0.1 to 7%, even more preferably from 0.2 to 5%, from the viewpoint of the industrial productivity of the fat or oil. Moreover, the content of the monoacylglycerols in the fat or oil as the component (A) is preferably 3% or less, more preferably from 0 to 2%, from the viewpoint of improvement of taste and flavor.

In addition, the content of a free fatty acid or a salt thereof contained in the fat or oil composition of the present invention is preferably 5% or less, more preferably from 0 to 2%, even more preferably from 0 to 1%, from the viewpoints of the taste and flavor and the industrial productivity of the fat or oil.

An edible fat or oil that may be used as an origin of the fat or oil as the component (A) of the present invention is not particularly limited, and examples thereof may include the following fats or oils: plant-derived fats or oils such as soybean oil, rapeseed oil, safflower oil, rice oil, corn oil, sunflower oil, cotton seed oil, olive oil, sesame oil, peanut oil, Job's tears seed oil, wheat germ oil, Japanese basil oil, linseed oil, perilla oil, sacha inchi oil, walnut oil, kiwi seed oil, salvia seed oil, grape seed oil, macadamia nut oil, hazelnut oil, pumpkin seed oil, camellia oil, tea seed oil, borage oil, palm oil, palm olein, palm stearin, coconut oil, palm kernel oil, cacao fat, sal fat, shea fat, and algae oil; animal-derived fats or oils such as fish oil, lard, beef tallow, and butter fat; and transesterified oils, hydrogenated oils, and fractionated oils thereof or the like. The oils may each be used singly or may be used in combination appropriately. Of those, from the viewpoint of usability, a liquid fat or oil excellent in low-temperature resistance is preferably used, and one or two or more selected from the group consisting of fish oil and algae oil are more preferably used because the oils are rich in eicosapentaenoic acid and docosahexaenoic acid. It should be noted that the liquid fat or oil refers to a fat or oil that stays liquid at 20°C, when determined in accordance with a cold test described in Standard Methods for the Analysis of Fats, Oils and Related Materials 2.3.8-27. In addition, the edible fat or oil is preferably a refined fat or oil obtained by a refinement step.

A rosemary extract as a component (B) to be used in the present invention refers to an extract of rosemary (Japanese name: Mannenrou) belonging to the genus *Rosmarinus* of the family Lamiaceae (*Rosmarinus officinalis L*.). Known varieties of the rosemary include Brenenden Blue, Creeping, Marine Blue, Majolica pink, Tuscan Blue, and Rex or the like. In the present invention, all of the varieties may be used.

The part of the rosemary to be used for preparing the rosemary extract as the component (B) is not particularly limited, and examples thereof include leaf, stem, germ, flower, branch, root, seed or the like, and a mixture thereof. The parts may be subjected to an extraction step without additional treatment, or may be subjected thereto after pulverization, cutting, or drying.

As extraction means for preparing an extract, there may be used any means such as solid-liquid extraction, liquid-liquid extraction, immersion, decoction, leaching, steam distillation, reflux extraction, sonication extraction, microwave extraction, or stirring.

A solvent for extraction is not particularly limited, and examples thereof include: water; an alcohol such as methanol or ethanol; subcritical or supercritical carbon dioxide; an edible fat or oil such as soybean oil, rapeseed oil, sunflower oil, palm oil, or lard; and a mixture thereof.

In addition, as the rosemary extract as the component (B), there may be used a commercially available one thereof, preferably one commercially available as an antioxidant, more preferably one commercially available as an antioxidant for foods and beverages.

The rosemary extract as the component (B) may be a crude product as long as the extract meets the standard acceptable for foods and exerts the effects of the present invention. The resultant crude product may further be purified by using known separation and purification methods in combination appropriately. As purification means, there are given, for example, precipitation with an organic solvent, centrifugation, ultrafiltration, treatment with an adsorbent, high-performance liquid chromatography, and column chromatography.

The content of the rosemary extract as the component (B) in the fat or oil composition is 0.005% or more and 0.25% or less, that is, from 0.005 to 0.25%, and is preferably 0.01% or more, more preferably 0.02% or more, even more preferably 0.03% or more, from the viewpoint of oxidative stability. In addition, the content of the rosemary extract as the component (B) in the fat or oil composition is preferably 0.2% or less, more preferably 0.17% or less, more preferably 0.16% or less, even more preferably 0.15% or less, from the viewpoint of taste and flavor. The content of the rosemary extract as the component (B) in the fat or oil composition is preferably from 0.01 to 0.25%, more preferably from 0.01 to 0.2%, more preferably from 0.02 to 0.17%, even more preferably from 0.03 to 0.15%, from the viewpoints of both oxidative stability and taste and flavor.

In the case where the total content of eicosapentaenoic acid and docosahexaenoic acid in the constituent fatty acids of the fat or oil as the component (A) is 5% or more, the content of the rosemary extract as the component (B) in the fat or oil composition is preferably from 0.016 to 0.25%. Further, in the case where the total content of eicosapentaenoic acid and docosahexaenoic acid in the constituent fatty acids of the fat or oil as the component (A) is 10% or more, the content of the rosemary extract as the component (B) in the fat or oil composition is preferably from 0.04 to 0.25%.

In the fat or oil composition of the present invention, a ratio (content mass ratio) of the content of the rosemary extract as the component (B) in the fat or oil composition to the total content of eicosapentaenoic acid and docosahexaenoic acid in the constituent fatty acids of the fat or oil as the component (A), [(B)/(C20:5+C22:6)], is preferably 0.004 or more, more preferably 0.005 or more, more preferably 0.01 or more, even more preferably 0.015 or more, from the viewpoint of oxidative stability. Further, the ratio is preferably 0.15 or less, more preferably 0.1 or less, more preferably 0.08 or less, even more preferably 0.075 or less, from the viewpoint of taste and flavor. The ratio of the content of the rosemary extract as the component (B) in the fat or oil composition to the total content of eicosapentaenoic acid and docosahexaenoic acid in the constituent fatty acids of the fat or oil as the component (A), [(B)/(C20:5+C22:6)], is preferably from 0.004 to 0.15, more preferably from 0.005 to 0.1, more preferably from 0.01 to 0.1, more preferably from 0.015 to 0.1, more preferably from 0.01 to 0.08, even more preferably from 0.015 to 0.75, from the viewpoints of both oxidative stability and taste and flavor.

A thyme extract as a component (C1) to be used in the present invention is an extract of *Thymus vulgaris* L. (alias: thyme) belonging to the genus *Thymus.* In addition, a basil extract is an extract of basil (*Ocimum basilicum* L.) belonging to the genus *Ocimum.*

In the present invention, the thyme extract and the basil extract may each be used alone or may be used in combination. Hereinafter, "a thyme extract, a basil extract, or a combination thereof" is sometimes simply referred to as component (C1).

The part of a plant to be used for preparing the component (C1) is not particularly limited, and examples thereof include leaf, stem, germ, flower, branch, root, fruit, and seed or the like, and a mixture thereof. The parts may be subjected to an extraction step without additional treatment, or may be subjected thereto after pulverization, cutting, or drying.

Extraction means for preparing the component (C1), a purification method for a solvent for extraction, and the like are the same as those of the rosemary extract as the component (B).

In addition, as the component (C1), there may be used a commercially available product thereof, preferably one commercially available as a product for foods.

A content of the component (C1) in the fat or oil composition is 0.00001% or more and 0.0025% or less, that is, from 0.00001 to 0.0025%, and is preferably 0.00002% or more, more preferably 0.00005% or more, even more preferably 0.0001% or more, from the viewpoint of suppression of odor derived from the rosemary extract. In addition, the content of the component (C1) in the fat or oil composition is preferably 0.02% or less, more preferably 0.0018% or less, more preferably 0.0015% or less, more preferably 0.0012% or less, more preferably 0.0009% or less, more preferably 0.0008% or less, even more preferably 0.0007% or less, from the viewpoint of taste and flavor. The content of the component (C1) is preferably from 0.00001 to 0.002%, more preferably from 0.00002 to 0.002%, more preferably from 0.00002 to 0.0018%, more preferably from 0.00002 to 0.0015%, more preferably from 0.00005 to 0.0012%, more preferably from 0.00005 to 0.0008%, more preferably from 0.0001 to 0.0009%, even more preferably from 0.0001 to 0.0007%, from the viewpoints of both suppression of odor derived from the rosemary extract, and taste and flavor.

In the case where the total content of eicosapentaenoic acid and docosahexaenoic acid in the constituent fatty acids of the fat or oil as the component (A) is 5% or more, further 10% or more, the content of the component (C1) in the fat or oil composition is preferably 0.0001% or more.

It should be noted that in the present invention, the rosemary extract as the component (B), and the thyme extract and the basil extract as the component (C1) may have a purity of about 100% or may be extracted or diluted with a solvent. The content of the rosemary extract as the component (B) or the content of the component (C1) in the present invention is determined based on the mass of a pure substance containing no solvent.

In the fat or oil composition of the present invention, a ratio (content mass ratio) of the content of the component (C1) to the content of the component (B), [(C1)/(B)], is 0.0003 or more, preferably 0.0004 or more, more preferably 0.001 or more, even more preferably 0.002 or more, from the viewpoint of suppression of odor derived from the rosemary extract as the component (B), and the ratio is 0.08 or less, preferably 0.05 or less, more preferably 0.03 or less, more preferably 0.019 or less, more preferably 0.018 or less, even more preferably 0.017 or less, from the viewpoints of suppression of odor derived from the component (C1), and taste and flavor. Further, in the fat or oil composition, the ratio of the content of the component (C1) to the content of the component (B), [(C1)/(B)], is from 0.0003 to 0.08, preferably from 0.0004 to 0.05, more preferably from 0.0004 to 0.03, more preferably from 0.001 to 0.03, more preferably from 0.002 to 0.03, more preferably from 0.002 to 0.019, more preferably from 0.002 to 0.018, even more preferably from 0.002 to 0.017, from the viewpoints of both suppression of odor derived from the component (C1), taste and flavor, and suppression of odor derived from the rosemary extract as the component (B).

A clove extract as a component (C2) to be used in the present invention is an extract of a clove (*Syzygium aromaticum* L.), which belongs to the genus *Eugenia* of the family Myrtaceae. Further, an oregano extract is an extract of an oregano (*Origanum vulgare* L.), which belongs to the genus *Origanum* of the family Lamiaceae. Further, a bay laurel extract is an extract of a bay laurel (*Laurus nobilis* L.), which belongs to the genus *Laurus* of the family Lauraceae.

In the present invention, one selected from the group consisting of the clove extract, the oregano extract, and the bay laurel extract may be used alone or two or more thereof may be used in combination. Hereinafter, "one or two or more selected from the group consisting of a clove extract, an oregano extract, and a bay laurel extract" are sometimes simply referred to as component (C2) .

Further, in the present invention, two or more selected from the group consisting of the thyme extract, the basil extract, the clove extract, the oregano extract, and the bay laurel extract may be used in combination.

The part of a plant to be used for preparing the component (C2) is not particularly limited, and examples thereof include leaf, stem, germ, flower, branch, root, fruit, and seed or the like,and a mixture thereof. The parts may be subjected to an extraction step without additional treatment, or may be subjected thereto after pulverization, cutting, or drying.

Extraction means for preparing the component (C2), a purification method for a solvent for extraction, and the like are the same as those of the rosemary extract as the component (B).

In addition, as the component (C2), there may be used a commercially available product, preferably a commercially available product for foods.

A content of the component (C2) in the fat or oil composition is 0.00001% or more and 0.001% or less, that is, from 0.00001 to 0.001%, and is preferably 0.00002% or more, more preferably 0.00005% or more, even more preferably 0.0001% or more, from the viewpoint of suppression of odor derived from the rosemary extract. In addition, the content of the component (C2) in the fat or oil composition is preferably 0.0009% or less, more preferably 0.0008% or less, even more preferably 0.0005% or less, from the viewpoint of taste and flavor. The content of the component (C2) is preferably from 0.00001 to 0.0009%, more preferably from 0.00002 to 0.0009%, more preferably from 0.00002 to 0.0008%, more preferably from 0.00005 to 0.0005%, even more preferably from 0.0001 to 0.0005%, from the viewpoints of both suppression of odor derived from the rosemary extract, and taste and flavor.

Further, the content of the clove extract in the fat or oil composition is preferably from 0.00001 to 0.0009%, more preferably from 0.00002 to 0.0008%, even more preferably from 0.00005 to 0.0005%, from the viewpoints of both suppression of odor derived from the rosemary extract, and taste and flavor.

Further, the content of the oregano extract in the fat or oil composition is preferably from 0.0001 to 0.0009%, more preferably from 0.0001 to 0.0005%, even more preferably from 0.0001 to 0.0003%, from the viewpoints of both suppression of odor derived from the rosemary extract, and taste and flavor.

Further, the content of the bay laurel extract in the fat or oil composition is preferably from 0.0001 to 0.0009%, more preferably from 0.0001 to 0.0005%, even more preferably from 0.0001 to 0.0003%, from the viewpoints of both suppression of odor derived from the rosemary extract, and taste and flavor.

In the case where the total content of eicosapentaenoic acid and docosahexaenoic acid in the constituent fatty acids of the fat or oil as the component (A) is 5% or more, further 10% or more, the content of the component (C2) in the fat or oil composition is preferably 0.00002% or more.

It should be noted that in the present invention, the rosemary extract as the component (B), and the clove extract, oregano extract, and bay laurel extract as the component (C2) may have a purity of about 100% or may be diluted with the solvent used for extraction. The content of the rosemary extract as the component (B) or the content of the component (C2) in the present invention is determined based on the mass of a pure substance containing no solvent.

In the fat or oil composition of the present invention, a ratio (content mass ratio) of the content of the component (C2) to the content of the component (B), [(C2)/(B)], is 0.0001 or more, preferably 0.0004 or more, even more preferably 0.001 or more, from the viewpoint of suppression of odor derived from the rosemary extract, and the ratio is 0.03 or less, preferably 0.019 or less, more preferably 0.018 or less, more preferably 0.017 or less, even more preferably 0.007 or less, from the viewpoints of suppression of odor derived from the component (C2), and taste and flavor. Further, in the fat or oil composition, the ratio of the content of the component (C2) to the content of the component (B), [(C2)/(B)], is from 0.0001 to 0.03, preferably from 0.0001 to 0.018, more preferably from 0.0001 to 0.017, more preferably from 0.0004 to 0.017, even more preferably from 0.001 to 0.007, from the viewpoints of both suppression of odor derived from the component (C2), taste and flavor, and suppression of odor derived from the rosemary extract.

In addition, the fat or oil composition of the present invention contains preferably 0.01 to 0.2%, more preferably 0.02 to 0.1% of an antioxidant other than the component (B) and the components (C1) and (C2) in the fat or oil composition, from the viewpoint of oxidative stability at the time of each of storage and cooking. Examples of the antioxidant include a natural antioxidant, a tocopherol, an ascorbic acid ester, and the like. Of those, one or two or more of antioxidants selected from the group consisting of a natural antioxidant, a tocopherol, and ascorbyl palmitate are preferably used, and a combination of ascorbyl palmitate and a tocopherol is more preferably used.

The fat or oil composition of the present invention can be obtained by, for example, adding the component (B), the components (C1) and (C2), and other components, if necessary, to the fat or oil as the component (A) and optionally, for example, heating and stirring the resultant mixture.

Such a fat or oil composition can be used in the same manner as a general edible fat or oil, and can be applied to a variety of foods and beverages including the fat or oil. In particular, the fat or oil composition is used suitably as a fat or oil for cooking, more suitably as a fat or oil for cooking of a deep-fried food such as fry or tempura, a sauteed food, or a grilled food.

The fat or oil composition of the present invention is also suitable as a fat or oil composition for a formulated milk powder. The fat or oil composition of the present invention has high oxidative stability while containing large amounts of eicosapentaenoic acid and docosahexaenoic acid, and has suppressed odor derived from a rosemary extract, and hence makes it possible to provide a formulated milk powder containing large amounts of eicosapentaenoic acid and docosahexaenoic acid and having good taste and flavor. The kind of the formulated milk powder is not limited, and a formulated milk powder or a follow-up formula is preferred.

When the fat or oil composition of the present invention is used to produce a formulated milk powder, as described below, a fat or oil preferably accounts for 10 to 50% of the formulated milk powder, and the fat or oil composition of the present invention preferably accounts for 25 to 100% of the fat or oil.

The formulated milk powder obtained by using the fat or oil composition of the present invention contains at least one component selected from the group consisting of lactose, whey protein, casein, and milk phospholipid.

It is preferred that the formulated milk powder obtained by using the fat or oil composition of the present invention comprise the following components (A'), (B), and (C1):
(A') a fat or oil in which a total content of eicosapentaenoic acid and docosahexaenoic acid in constituent fatty acids of the fat or oil is from 0.1 to 20 mass% with respect to total constituent fatty acids of the fat or oil;
(B) a rosemary extract at a content of from 0.001 to 0.1 mass%; and
(C1) a thyme extract, a basil extract, or a combination thereof at a content of from 0.000005 to 0.001 mass%.

The fat or oil as the component (A') in the formulated milk powder also includes milk fat in addition to the fat or oil as the component (A).

A content of the fat or oil as the component (A') in the formulated milk powder obtained by using the fat or oil composition of the present invention is preferably from 10 to 50%, more preferably from 20 to 45%, even more preferably from 20 to 40%, from the viewpoint of nutritional support.

In the formulated milk powder obtained by using the fat or oil composition of the present invention, the total content of eicosapentaenoic acid and docosahexaenoic acid in the constituent fatty acids with respect to the total constituent fatty acids of the fat or oil as the component (A') is from 0.1 to 20%, and is preferably 0.3% or more, more preferably 0.5% or more, from the viewpoint of physiological effects. Further, the total content of eicosapentaenoic acid and docosahexaenoic acid is preferably 15% or less, more preferably 10% or less, more preferably 7% or less, more preferably 5% or less, more preferably 3% or less, even more preferably 1% or less, from the viewpoint of oxidative stability. The total content of eicosapentaenoic acid and docosahexaenoic acid in the constituent fatty acids of the fat or oil as the component (A') with respect to the total constituent fatty acids of the fat or oil is preferably from 0.1 to 15%, more preferably from 0.3 to 10%, more preferably from 0.3 to 7%, more preferably from 0.3 to 5%, more preferably from 0.5 to 3%, even more preferably from 0.5 to 1%, from the viewpoints of both physiological effects and oxidative stability.

Further, the content of the rosemary extract as the component (B) in the formulated milk powder is 0.001% or more and 0.1% or less, that is, from 0.001 to 0.1%, and is preferably 0.002% or more, more preferably 0.003% or more, from the viewpoint of oxidative stability. In addition, the content of the rosemary extract as the component (B) is preferably 0.05% or less, more preferably 0.01% or less, from the viewpoint of taste and flavor. The content of the rosemary extract as the component (B) in the formulated milk powder is preferably from 0.002 to 0.05%, more preferably from 0.003 to 0.01%, from the viewpoints of both oxidative stability and taste and flavor.

In the formulated milk powder obtained by using the fat or oil composition of the present invention, a ratio (content mass ratio) of the content of the rosemary extract as the component (B) in the formulated milk powder to the total content, in the formulated milk powder, of eicosapentaenoic acid and docosahexaenoic acid in the constituent fatty acids of the fat or oil as the component (A'), [(B)/(C20:5+C22:6)], is preferably 0.004 or more, more preferably 0.005 or more, more preferably 0.01 or more, even more preferably 0.015 or more, from the viewpoint of oxidative stability. Further, the ratio is preferably 0.15 or less, more preferably 0.1 or less, from the viewpoint of taste and flavor. The ratio of the content of the rosemary extract as the component (B) in the formulated milk powder to the total content, in the formulated milk powder, of eicosapentaenoic acid and docosahexaenoic acid in the constituent fatty acids of the fat or oil as the component (A'), [(B)/(C20:5+C22:6)], is preferably from 0.004 to 0.15, more preferably from 0.005 to 0.1, more preferably from 0.01 to 0.1, even more preferably from 0.015 to 0.1, from the viewpoints of both oxidative stability and taste and flavor.

In addition, a content of the component (C1) in the formulated milk powder is 0.000005% or more and 0.001% or less, that is, from 0.000005 to 0.001%, and is preferably 0.00002% or more, more preferably 0.00003% or more, from the viewpoint of suppression of odor derived from the rosemary extract. In addition, the content of the component (C1) in the formulated milk powder is preferably 0.0005% or less, more preferably 0.0002% or less, even more preferably 0.00015% or less, from the viewpoint of taste and flavor. The content of the component (C1) in the formulated milk powder is preferably from 0.000005 to 0.0005%, more preferably from 0.00002 to 0.0005%, even more preferably from 0.00003 to 0.00015%, from the viewpoints of both suppression of odor derived from the rosemary extract, and taste and flavor.

In the formulated milk powder obtained by using the fat or oil composition of the present invention, a ratio (content mass ratio) of the content of the component (C1) to the content of the component (B), [(C1)/(B)], is 0.0003 or more, preferably 0.0004 or more, more preferably 0.001 or more, even more preferably 0.002 or more, from the viewpoint of suppression of the odor derived from the rosemary extract as the component (B), and the ratio is 0.08 or less, preferably 0.05 or less, more preferably 0.03 or less, more preferably 0.019 or less, more preferably 0.018 or less, even more preferably 0.017 or less, from the viewpoints of suppression of the odor derived from the component (C1), and taste and flavor. Further, in the formulated milk powder, the ratio of the content of the component (C1) to the content of the component (B), [(C1)/(B)], is from 0.0003 to 0.08, preferably from 0.0004 to 0.05, more preferably from 0.0004 to 0.03, more preferably from 0.001 to 0.03, more preferably from 0.002 to 0.03, more preferably from 0.002 to 0.019, more preferably from 0.002 to 0.018, even more preferably from 0.002 to 0.017, from the viewpoints of both suppression of odor derived from the component (C1), and taste and flavor, and suppression of odor derived from the rosemary extract as the component (B).

The formulated milk powder can be obtained by, for example, selecting, as appropriate, the fat or oil composition of the present invention, water, milk or milk components other than milk products, such as lactose, whey protein, casein, and milk phospholipid, saccharides such as soluble polysaccharides and fructo-oligosaccharide, minerals, and other components, mixing them, and drying the mixture into powder.

In relation to the above-mentioned embodiments, the present invention discloses the following fat or oil compositions or uses.
<1> A fat or oil composition, comprising the following components (A), (B), and (C1):
   (A) a fat or oil in which a total content of eicosapentaenoic acid and docosahexaenoic acid in constituent fatty acids of the fat or oil is 0.1 mass% or more and 20 mass% or less, that is, from 0.1 to 20 mass% with respect to total constituent fatty acids of the fat or oil;
   (B) a rosemary extract at a content of from 0.005 to 0.25 mass%; and
   (C1) a thyme extract, a basil extract, or a combination thereof at a content of from 0.00001 to 0.0025 mass%, wherein a ratio (content mass ratio) of the content of the component (C1) to the content of the rosemary extract as the component (B), [(C1)/(B)], is from 0.0003 to 0.08.
<2> The fat or oil composition according to the above-mentioned item <1>, in which the total content of eicosapentaenoic acid and docosahexaenoic acid in the constituent fatty acids of the fat or oil as the component (A) with respect to the total fatty acids is 0.1 mass% or more, more preferably 0.3 mass% or more, more preferably 1 mass% or more, even more preferably 2 mass% or more.
<3> The fat or oil composition according to the above-mentioned item <1> or <2>, in which the total content of eicosapentaenoic acid and docosahexaenoic acid in the constituent fatty acids of the fat or oil as the component (A) with respect to the total fatty acids is 20 mass% or less, more preferably 15 mass% or less, more preferably 10 mass% or less, more preferably 7 mass% or less, even more preferably 5 mass% or less.
<4> The fat or oil composition according to the above-mentioned item <1>, in which the total content of eicosapentaenoic acid and docosahexaenoic acid in the constituent fatty acids of the fat or oil as the component (A) with respect to the total fatty acids is preferably from 0.1 to 15 mass%, more preferably from 0.3 to 10 mass%, more preferably from 1 to 7 mass%, even more preferably from 2 to 5 mass%.
<5> The fat or oil composition according to any one of the above-mentioned items <1> to <4>, in which the component (A) preferably includes one or two or more of fats or oils selected from the group consisting of fish oil and algae oil.
<6> The fat or oil composition according to any one of the above-mentioned items <1> to <5>, in which the content of the rosemary extract as the component (B) is 0.005 mass% or more, more preferably 0.01 mass% or more, more preferably 0.02 mass% or more, even more preferably 0.03 mass% or more.
<7> The fat or oil composition according to any one of the above-mentioned items <1> to <6>, in which the content of the rosemary extract as the component (B) is 0.25 mass% or less, more preferably 0.2 mass% or less, more preferably 0.17 mass% or less, more preferably 0.16 mass% or less, even more preferably 0.15 mass% or less.
<8> The fat or oil composition according to any one of the above-mentioned items <1> to <5>, in which the content of the rosemary extract as the component (B) is preferably from 0.005 to 0.25 mass%, more preferably from 0.01 to 0.2 mass%, more preferably from 0.02 to 0.17 mass%, even more preferably from 0.03 to 0.15 mass%.
<9> The fat or oil composition according to any one of the above-mentioned items <1> to <8>, in which the ratio (content mass ratio) of the content of the rosemary extract as the component (B) in the fat or oil composition to the total content of eicosapentaenoic acid and docosahexaenoic acid in the constituent fatty acids of the fat or oil as the component (A), [(B)/(C20:5+C22:6)], is preferably 0.004 or more, more preferably 0.005 or more, more preferably 0.01 or more, even more preferably 0.015 or more.
<10> The fat or oil composition according to any one of the above-mentioned items <1> to <9>, in which the ratio (content mass ratio) of the content of the rosemary extract as the component (B) in the fat or oil composition to the total content of eicosapentaenoic acid and docosahexaenoic acid in the constituent fatty acids of the fat or oil as the component (A), [(B)/(C20:5+C22:6)], is preferably 0.15 or less, more preferably 0.1 or less.
<11> The fat or oil composition according to any one of the above-mentioned items <1> to <8>, in which the ratio (content mass ratio) of the content of the rosemary extract as the component (B) in the fat or oil composition to the total content of eicosapentaenoic acid and docosahexaenoic acid in the constituent fatty acids of the fat or oil as the component (A), [(B)/(C20:5+C22:6)], is preferably from 0.004 to 0.15, more preferably from 0.005 to 0.1, more preferably from 0.01 to 0.1, even more preferably from 0.015 to 0.1.
<12> The fat or oil composition according to any one of the above-mentioned items <1> to <11>, in which the content of the component (C1) is 0.00001 mass% or more, more preferably 0.00002 mass% or more, more preferably 0.00005 mass% or more, even more preferably 0.0001 mass% or more.
<13> The fat or oil composition according to any one of the above-mentioned items <1> to <12>, in which the content of the component (C1) is 0.0025 mass% or less, more preferably 0.002 mass% or less, more preferably 0.0018 mass% or less, more preferably 0.0015 mass% or less, more preferably 0.0012 mass% or less, more preferably 0.0009 mass% or less, more preferably 0.0008 mass% or less, even more preferably 0.0007 mass% or less.
<14> The fat or oil composition according to any one of the above-mentioned items <1> to <11>, in which the content of the component (C1) is preferably from 0.00001 to 0.002 mass%, more preferably from 0.00002 to 0.002 mass%, more preferably from 0.00002 to 0.0018 mass%, more preferably from 0.00002 to 0.0015 mass%, more preferably from 0.00005 to 0.0012 mass%, more preferably from 0.00005 to 0.0008 mass%, more preferably from 0.0001 to 0.0009 mass%, even more preferably from 0.0001 to 0.0007 mass%.
<15> The fat or oil composition according to any one of the above-mentioned items <1> to <14>, in which the ratio (content mass ratio) of the content of the component (C1) to the content of the component (B), [(C1)/(B)], is preferably 0.0004 or more, more preferably 0.001 or more, even more preferably 0.002 or more.
<16> The fat or oil composition according to any one of the above-mentioned items <1> to <15>, in which the ratio (content mass ratio) of the content of the component (C1) to the content of the component (B), [(C1)/(B)], is preferably 0.05 or less, more preferably 0.03 or less, more preferably 0.019 or less, more preferably 0.018 or less, even more preferably 0.017 or less.
<17> The fat or oil composition according to any one of the above-mentioned items <1> to <14>, in which the ratio (content mass ratio) of the content of the component (C1) to the content of the component (B), [(C1)/(B)], is preferably from 0.0004 to 0.05, more preferably from 0.0004 to 0.03, more preferably from 0.001 to 0.03, more preferably from 0.002 to 0.03, more preferably from 0.002 to 0.019, more preferably from 0.002 to 0.018, even more preferably from 0.002 to 0.017.
<18> The fat or oil composition according to any one of the above-mentioned items <1> to <17>, in which the fat or oil composition comprises preferably 95 to 99.95 mass%, more preferably 97 to 99 mass% of the fat or oil as the component (A).
<19> The fat or oil composition according to any one of the above-mentioned items <1> to <18>, in which the content of triacylglycerols in the fat or oil as the component (A) is preferably from 78 to 100 mass%, more preferably from 88 to 100 mass%, more preferably from 90 to 99.5 mass%, even more preferably from 92 to 99 mass%.
<20> The fat or oil composition according to any one of the above-mentioned items <1> to <19>, in which the ratio of unsaturated fatty acids in the constituent fatty acids of the fat or oil as the component (A) other than eicosapentaenoic acid and docosahexaenoic acid is preferably from 60 to 100 mass%, more preferably from 70 to 100 mass%, more preferably from 75 to 100 mass%, even more preferably from 80 to 98 mass%.
<21> The fat or oil composition according to any one of the above-mentioned items <1> to <20>, further comprising preferably one or two or more of antioxidants selected from the group consisting of a natural antioxidant, a tocopherol, and an ascorbic acid ester, more preferably one or two or more of antioxidants selected from the group consisting of a natural antioxidant, a tocopherol, and ascorbyl palmitate, even more preferably ascorbyl palmitate and a tocopherol as antioxidants.
<22> The fat or oil composition according to the above-mentioned item <21>, in which the content of the antioxidant is preferably from 0.01 to 0.2 mass%, more preferably from 0.02 to 0.1 mass%.
<23> The fat or oil composition according to any one of the above-mentioned items <1> to <22>, in which the rosemary extract as the component (B) is preferably an extract obtained from one or two or more of parts selected from the group consisting of leaf, stem, germ, flower, branch, root, and seed of rosemary.
<24> The fat or oil composition according to any one of the above-mentioned items <1> to <23>, in which the rosemary extract as the component (B) is preferably one extracted with one or two or more of solvents selected from the group consisting of water, an alcohol, subcritical or supercritical carbon dioxide, and an edible fat or oil.
<25> The fat or oil composition according to the above-mentioned item <24>, in which the alcohol is preferably methanol, ethanol, or a combination thereof, and the edible fat or oil is preferably one or two or more selected from the group consisting of soybean oil, rapeseed oil, sunflower oil, palm oil, and lard.
<26> The fat or oil composition according to any one of the above-mentioned items <1> to <25>, in which the component (C1) is preferably an extract obtained from one or two or more of parts selected from the group consisting of leaf, stem, germ, flower, branch, root, and seed of thyme or basil.
<27> The fat or oil composition according to any one of the above-mentioned items <1> to <26>, in which the component (C1) is preferably one extracted with one or two or more of solvents selected from the group consisting of water, an alcohol, subcritical or supercritical carbon dioxide, and an edible fat or oil.
<28> The fat or oil composition according to the above-mentioned item <27>, in which the alcohol is preferably methanol, ethanol, or a combination thereof, and the edible fat or oil is preferably one or two or more selected from the group consisting of soybean oil, rapeseed oil, sunflower oil, palm oil, and lard.
<29> The fat or oil composition according to any one of the above-mentioned items <1> to <28>, in which the rosemary extract as the component (B) is preferably a commercially available product, more preferably a commercially available antioxidant, even more preferably a commercially available antioxidant for foods and beverages.
<30> The fat or oil composition according to any one of the above-mentioned items <1> to <29>, in which the component (C1) is preferably a commercially available product, more preferably a commercially available product for foods.
<31> Use of the fat or oil composition according to any one of the above-mentioned items <1> to <30> as an edible fat or oil.
<32> The use according to the above-mentioned item <31> preferably as a fat or oil for cooking, more preferably as a fat or oil for cooking of a deep-fried food, a sauteed food, or a grilled food.
<33> The use according to the above-mentioned item <31> preferably as a fat or oil for a formulated milk powder.
<34> A formulated milk powder, comprising: the fat or oil composition according to any one of the above-mentioned items <1> to <30>; and at least one component selected from the group consisting of lactose, whey protein, casein, and milk phospholipid.
<35> The formulated milk powder according to the above-mentioned item <34>, comprising the following components (A'), (B), and (C1) :
   (A') a fat or oil in which a total content of eicosapentaenoic acid and docosahexaenoic acid in constituent fatty acids of the fat or oil is from 0.1 to 20 mass% with respect to total constituent fatty acids of the fat or oil;
   (B) a rosemary extract at a content of from 0.001 to 0.1 mass%; and
   (C1) a thyme extract, a basil extract, or a combination thereof at a content of from 0.000005 to 0.001 mass%.
<36> The formulated milk powder according to the above-mentioned item <35>, in which the content of the fat or oil as the component (A') is preferably from 10 to 50 mass%, more preferably from 20 to 45 mass%, even more preferably from 20 to 40 mass%.
<37> The formulated milk powder according to the above-mentioned item <35> or <36>, in which the total content of eicosapentaenoic acid and docosahexaenoic acid in the constituent fatty acids of the fat or oil as the component (A') with respect to the total fatty acids is preferably 0.3 mass% or more, more preferably 0.5 mass% or more, is preferably 15 mass% or less, more preferably 10 mass% or less, more preferably 7 mass% or less, more preferably 5 mass% or less, more preferably 3 mass% or less, even more preferably 1 mass% or less, and is preferably from 0.1 to 15 mass%, more preferably from 0.3 to 10 mass%, more preferably from 0.3 to 7 mass%, more preferably from 0.3 to 5 mass%, more preferably from 0.5 to 3 mass%, even more preferably from 0.5 to 1 mass%.
<38> The formulated milk powder according to any one of the above-mentioned items <35> to <37>, in which the content of the rosemary extract as the component (B) is preferably 0.002 mass% or more, more preferably 0.003 mass% or more, is preferably 0.05 mass% or less, more preferably 0.01 mass% or less, and is preferably from 0.002 to 0.05 mass%, more preferably from 0.003 to 0.01 mass%.
<39> The formulated milk powder according to any one of the above-mentioned items <35> to <38>, in which the ratio (content mass ratio) of the content of the rosemary extract as the component (B) in the formulated milk powder to the total content, in the formulated milk powder, of eicosapentaenoic acid and docosahexaenoic acid in the constituent fatty acids of the fat or oil as the component (A'), [(B)/(C20:5+C22:6)], is preferably 0.004 or more, more preferably 0.005 or more, more preferably 0.01 or more, even more preferably 0.015 or more, is preferably 0.15 or less, more preferably 0.1 or less, and is preferably from 0.004 to 0.15, more preferably from 0.005 to 0.1, more preferably from 0.01 to 0.1, even more preferably from 0.015 to 0.1.
<40> The formulated milk powder according to any one of the above-mentioned items <35> to <39>, in which the content of the component (C1) is preferably 0.00002 mass% or more, more preferably 0.00003 mass% or more, is preferably 0.0005 mass% or less, more preferably 0.0002 mass% or less, even more preferably 0.00015 mass% or less, and is preferably from 0.000005 to 0.0005 mass%, more preferably from 0.00002 to 0.0005 mass%, even more preferably from 0.00003 to 0.00015 mass%.
<41> The formulated milk powder according to any one of the above-mentioned items <35> to <40>, in which the ratio (content mass ratio) of the content of the component (C1) to the content of the component (B), [(C1)/(B)], is preferably 0.0004 or more, more preferably 0.001 or more, even more preferably 0.002 or more, is preferably 0.05 or less, more preferably 0.03 or less, more preferably 0.019 or less, more preferably 0.018 or less, even more preferably 0.017 or less, and is preferably from 0.0004 to 0.05, more preferably from 0.0004 to 0.03, more preferably from 0.001 to 0.03, more preferably from 0.002 to 0.03, more preferably from 0.002 to 0.019, more preferably from 0.002 to 0.018, even more preferably from 0.002 to 0.017.
<42> A fat or oil composition, comprising the following components (A), (B), and (C2):
   (A) a fat or oil in which a total content of eicosapentaenoic acid and docosahexaenoic acid in constituent fatty acids of the fat or oil is 0.1 mass% or more and 20 mass% or less, that is, from 0.1 to 20 mass% with respect to total constituent fatty acids of the fat or oil;
   (B) a rosemary extract at a content of from 0.005 to 0.25 mass%; and
   (C2) one or two or more selected from a clove extract, an oregano extract, and a bay laurel extract at a content of from 0.00001 to 0.001 mass%, wherein a ratio (content mass ratio) of the content of the component (C2) to the content of the rosemary extract as the component (B), [(C2)/(B)], is from 0.0001 to 0.03.
<43> The fat or oil composition according to the above-mentioned item <42>, in which the total content of eicosapentaenoic acid and docosahexaenoic acid in the constituent fatty acids of the fat or oil as the component (A) with respect to the total fatty acids is 0.1 mass% or more, more preferably 0.3 mass% or more, more preferably 1 mass% or more, even more preferably 2 mass% or more.
<44> The fat or oil composition according to the above-mentioned item <42> or <43>, in which the total content of eicosapentaenoic acid and docosahexaenoic acid in the constituent fatty acids of the fat or oil as the component (A) with respect to the total fatty acids is 20 mass% or less, more preferably 15 mass% or less, more preferably 10 mass% or less, more preferably 7 mass% or less, even more preferably 5 mass% or less.
<45> The fat or oil composition according to the above-mentioned item <42>, in which the total content of eicosapentaenoic acid and docosahexaenoic acid in the constituent fatty acids of the fat or oil as the component (A) with respect to the total fatty acids is preferably from 0.1 to 15 mass%, more preferably from 0.3 to 10 mass%, more preferably from 1 to 7 mass%, even more preferably from 2 to 5 mass%.
<46> The fat or oil composition according to any one of the above-mentioned items <42> to <45>, in which the component (A) preferably contains one or two or more of fats or oils selected from the group consisting of fish oil and algae oil.
<47> The fat or oil composition according to any one of the above-mentioned items <42> to <46>, in which the content of the rosemary extract as the component (B) is 0.005 mass% or more, more preferably 0.01 mass% or more, more preferably 0.02 mass% or more, even more preferably 0.03 mass% or more.
<48> The fat or oil composition according to any one of the above-mentioned items <42> to <47>, in which the content of the rosemary extract as the component (B) is 0.25 mass% or less, more preferably 0.2 mass% or less, more preferably 0.17 mass% or less, more preferably 0.16 mass% or less, even more preferably 0.15 mass% or less.
<49> The fat or oil composition according to any one of the above-mentioned items <42> to <46>, in which the content of the rosemary extract as the component (B) is preferably from 0.005 to 0.25 mass%, more preferably from 0.01 to 0.25 mass%, more preferably from 0.01 to 0.2 mass%, more preferably from 0.02 to 0.17 mass%, even more preferably from 0.03 to 0.15 mass%.
<50> The fat or oil composition according to any one of the above-mentioned items <42> to <49>, in which the ratio (content mass ratio) of the content of the rosemary extract as the component (B) in the fat or oil composition to the total content of eicosapentaenoic acid and docosahexaenoic acid in the constituent fatty acids of the fat or oil as the component (A), [(B)/(C20:5+C22:6)], is preferably 0.004 or more, more preferably 0.005 or more, more preferably 0.01 or more, even more preferably 0.015 or more.
<51> The fat or oil composition according to any one of the above-mentioned items <42> to <50>, in which the ratio (content mass ratio) of the content of the rosemary extract as the component (B) in the fat or oil composition to the total content of eicosapentaenoic acid and docosahexaenoic acid in the constituent fatty acids of the fat or oil as the component (A), [(B)/(C20:5+C22:6)], is preferably 0.15 or less, more preferably 0.1 or less, more preferably 0.08 or less, even more preferably 0.075 or less.
<52> The fat or oil composition according to any one of the above-mentioned items <42> to <51>, in which the ratio (content mass ratio) of the content of the rosemary extract as the component (B) in the fat or oil composition to the total content of eicosapentaenoic acid and docosahexaenoic acid in the constituent fatty acids of the fat or oil as the component (A), [(B)/(C20:5+C22:6)], is preferably from 0.004 to 0.15, more preferably from 0.005 to 0.1, more preferably from 0.01 to 0.08, even more preferably from 0.015 to 0.075.
<53> The fat or oil composition according to any one of the above-mentioned items <42> to <52>, in which the content of the component (C2) is 0.00001 mass% or more, more preferably 0.00002 mass% or more, more preferably 0.00005 mass% or more, even more preferably 0.0001 mass% or more.
<54> The fat or oil composition according to any one of the above-mentioned items <42> to <53>, in which the content of the component (C2) is 0.001 mass% or less, more preferably 0.0009 mass% or less, more preferably 0.0008 mass% or less, even more preferably 0.0005 mass% or less.
<55> The fat or oil composition according to any one of the above-mentioned items <42> to <52>, in which the content of the component (C2) is preferably from 0.00001 to 0.0009 mass%, more preferably from 0.00002 to 0.0009 mass%, more preferably from 0.00002 to 0.0008 mass%, more preferably from 0.00005 to 0.0005 mass%, even more preferably from 0.0001 to 0.0005 mass%.
<56> The fat or oil composition according to any one of the above-mentioned items <42> to <55>, in which the ratio (content mass ratio) of the content of the component (C2) to the content of the component (B), [(C2)/(B)], is preferably 0.0004 or more, even more preferably 0.001 or more.
<57> The fat or oil composition according to any one of the above-mentioned items <42> to <56>, in which the ratio (content mass ratio) of the content of the component (C2) to the content of the component (B), [(C2)/(B)], is preferably 0.019 or less, more preferably 0.018 or less, more preferably 0.017 or less, even more preferably 0.007 or less.
<58> The fat or oil composition according to any one of the above-mentioned items <42> to <55>, in which the ratio of the content of the component (C2) to the content of the component (B), [(C2)/(B)], is preferably from 0.0001 to 0.018, more preferably from 0.0001 to 0.017, more preferably from 0.0004 to 0.017, even more preferably from 0.001 to 0.007.
<59> The fat or oil composition according to any one of the above-mentioned items <42> to <58>, comprising preferably 95 to 99.95 mass%, more preferably 97 to 99 mass% of the fat or oil as the component (A).
<60> The fat or oil composition according to any one of the above-mentioned items <42> to <59>, in which the content of triacylglycerols in the fat or oil as the component (A) is preferably from 78 to 100 mass%, more preferably from 88 to 100 mass%, more preferably from 90 to 99.5 mass%, even more preferably from 92 to 99 mass%.
<61> The fat or oil composition according to any one of the above-mentioned items <42> to <60>, in which the ratio of unsaturated fatty acids in the constituent fatty acids of the fat or oil as the component (A) other than eicosapentaenoic acid and docosahexaenoic acid is preferably from 60 to 100 mass%, more preferably from 70 to 100 mass%, more preferably from 75 to 100 mass%, even more preferably from 80 to 98 mass%.
<62> The fat or oil composition according to any one of the above-mentioned items <42> to <60>, further comprising preferably one or two or more of antioxidants selected from the group consisting of a natural antioxidant, a tocopherol, and an ascorbic acid ester, more preferably one or two or more of antioxidants selected from the group consisting of a natural antioxidant, a tocopherol, and ascorbyl palmitate, even more preferably ascorbyl palmitate and a tocopherol as antioxidants.
<63> The fat or oil composition according to the above-mentioned item <62>, in which the content of the antioxidant is preferably from 0.01 to 0.2 mass%, more preferably from 0.02 to 0.1 mass%.
<64> The fat or oil composition according to any one of the above-mentioned items <42> to <63>, in which the rosemary extract as the component (B) is preferably an extract obtained from one or two or more of parts selected from the group consisting of leaf, stem, germ, flower, branch, root, and seed of rosemary.
<65> The fat or oil composition according to any one of the above-mentioned items <42> to <64>, in which the rosemary extract as the component (B) is preferably one extracted with one or two or more of solvents selected from the group consisting of water, an alcohol, subcritical or supercritical carbon dioxide, and an edible fat or oil.
<66> The fat or oil composition according to the above-mentioned item <65>, in which the alcohol is preferably methanol, ethanol, or a combination thereof, and the edible fat or oil is preferably one or two or more selected from the group consisting of soybean oil, rapeseed oil, sunflower oil, palm oil, and lard.
<67> The fat or oil composition according to any one of the above-mentioned items <42> to <66>, in which the component (C2) is preferably an extract obtained from one or two or more of part selected from the group consisting of leaf, stem, germ, flower, branch, root, and seed of thyme or basil.
<68> The fat or oil composition according to any one of the above-mentioned items <42> to <67>, in which the component (C2) is preferably one extracted with one or two or more of solvents selected from the group consisting of water, an alcohol, subcritical or supercritical carbon dioxide, and an edible fat or oil.
<69> The fat or oil composition according to the above-mentioned item <68>, in which the alcohol is preferably methanol, ethanol, or a combination thereof, and the edible fat or oil is preferably one or two or more selected from the group consisting of soybean oil, rapeseed oil, sunflower oil, palm oil, and lard.
<70> The fat or oil composition according to any one of the above-mentioned items <42> to <69>, in which the rosemary extract as the component (B) is preferably a commercially available product, more preferably a commercially available antioxidant, even more preferably a commercially available antioxidant for foods and beverages.
<71> The fat or oil composition according to any one of the above-mentioned items <42> to <70>, in which the component (C2) is preferably a commercially available product, more preferably a commercially available product for foods.
<72> Use of the fat or oil composition according to any one of the above-mentioned items <42> to <71> as an edible fat or oil.
<73> The use according to the above-mentioned item <72> preferably as a fat or oil for cooking, more preferably as a fat or oil for cooking of a deep-fried food, a sauteed food, or a grilled food.
<74> A method of improving oxidative stability of a fat or oil composition, comprising blending a rosemary extract as a component (B) and a thyme extract, a basil extract, or a combination thereof as a component (C1) into a fat or oil composition containing, as a component (A), a fat or oil in which the total content of eicosapentaenoic acid and docosahexaenoic acid in constituent fatty acids of the fat or oil is from 0.1 to 20 mass% with respect to the total constituent fatty acids of the fat or oil, so that the content of the rosemary extract as the component (B) is from 0.005 to 0.25 mass% and the content of the thyme extract, the basil extract, or the combination thereof as the component (C1) is from 0.00001 to 0.0025 mass%, and the content mass ratio of the content of the component (C1) to the content of the rosemary extract as the component (B), [(C1)/(B)], is from 0.0003 to 0.08.
<75> The method of improving oxidative stability of a fat or oil composition according to the above-mentioned item <74>, comprising blending the rosemary extract as the component (B) into the fat or oil composition, so that the ratio (content mass ratio) of the content of the rosemary extract as the component (B) in the fat or oil composition to the total content of eicosapentaenoic acid and docosahexaenoic acid in the constituent fatty acids of the fat or oil as the component (A) in the fat or oil composition, [(B)/(C20:5+C22:6)], is preferably 0.004 or more, more preferably 0.005 or more, more preferably 0.01 or more, even more preferably 0.015 or more, is preferably 0.15 or less, more preferably 0.1 or less, more preferably 0.08 or less, even more preferably 0.075 or less, and is preferably from 0.004 to 0.15, more preferably from 0.005 to 0.1, more preferably from 0.01 to 0.1, more preferably from 0.015 to 0.1, more preferably from 0.01 to 0.08, even more preferably from 0.015 to 0.075.
<76> The method of improving oxidative stability of a fat or oil composition according to the above-mentioned item <74> or <75>, comprising blending the rosemary extract as the component (B) and the thyme extract, the basil extract, or the combination thereof as the component (C1) into the fat or oil composition, so that the ratio (content mass ratio) of the content of the component (C1) in the fat or oil composition to the content of the component (B) in the fat or oil composition, [(C1)/(B)], is 0.0004 or more, more preferably 0.001 or more, even more preferably 0.002 or more, is 0.05 or less, more preferably 0.03 or less, more preferably 0.019 or less, more preferably 0.018 or less, even more preferably 0.017 or less, and is 0.0004 to 0.05, more preferably from 0.0004 to 0.03, more preferably from 0.001 to 0.03, more preferably from 0.002 to 0.03, more preferably from 0.002 to 0.019, more preferably from 0.002 to 0.018, even more preferably from 0.002 to 0.017.
<77> A method of improving oxidative stability of a fat or oil composition, comprising blending a rosemary extract as a component (B) and one or two or more, as a component (C2), selected from a clove extract, an oregano extract, and a bay laurel extract into a fat or oil composition containing, as a component (A), a fat or oil in which the total content of eicosapentaenoic acid and docosahexaenoic acid in constituent fatty acids of the fat or oil is from 0.1 to 20 mass% with respect to the total constituent fatty acids of the fat or oil, so that the content of the rosemary extract as the component (B) is from 0.005 to 0.25 mass% and the content of the one or two or more, as the component (C2), selected from the clove extract, the oregano extract, and the bay laurel extract is from 0.00001 to 0.001 mass%, and the content mass ratio of the content of the component (C2) to the content of the rosemary extract as the component (B), [(C2)/(B)], is from 0.0001 to 0.03.
<78> The method of improving oxidative stability of a fat or oil composition according to the above-mentioned item <77>, comprising blending the rosemary extract as the component (B) into the fat or oil composition, so that the ratio (content mass ratio) of the content of the rosemary extract as the component (B) in the fat or oil composition to the total content of eicosapentaenoic acid and docosahexaenoic acid in the constituent fatty acids of the fat or oil as the component (A) in the fat or oil composition, [(B)/(C20:5+C22:6)], is preferably 0.004 or more, more preferably 0.005 or more, more preferably 0.01 or more, even more preferably 0.015 or more, is preferably 0.15 or less, more preferably 0.1 or less, more preferably 0.08 or less, even more preferably 0.075 or less, and is preferably from 0.004 to 0.15, more preferably from 0.005 to 0.1, more preferably from 0.01 to 0.08, even more preferably from 0.015 to 0.075.
<79> The method of improving oxidative stability of a fat or oil composition according to the above-mentioned item <77> or <78>, in which the blending comprises blending the rosemary extract as the component (B) and the one or two or more, as the component (C2), selected from the clove extract, the oregano extract, and the bay laurel extract into the fat or oil composition, so that the ratio (content mass ratio) of the content of the component (C2) in the fat or oil composition to the content of the component (B) in the fat or oil composition, [(C2)/(B)], is 0.0004 or more, even more preferably 0.001 or more, is 0.019 or less, more preferably 0.018 or less, more preferably 0.017 or less, even more preferably 0.007 or less, and is from 0.0001 to 0.018, more preferably from 0.0001 to 0.017, more preferably from 0.0004 to 0.017, even more preferably from 0.001 to 0.007.
<80> A method of suppressing odor of a rosemary extract as a component (B), comprising blending a thyme extract, a basil extract, or a combination thereof as a component (C1) into a fat or oil composition containing the rosemary extract as the component (B) at a content of from 0.005 to 0.25 mass% and containing, as a component (A), a fat or oil in which the total content of eicosapentaenoic acid and docosahexaenoic acid in constituent fatty acids of the fat or oil is 0.1 mass% or more and 20 mass% or less, that is, from 0.1 to 20 mass%, with respect to the total constituent fatty acids of the fat or oil, so that the content of the thyme extract, the basil extract, or the combination thereof as the component (C1) is from 0.00001 to 0.0025 mass%, and the content mass ratio of the content of the component (C1) to the content of the rosemary extract as the component (B), [(C1)/(B)], is from 0.0003 to 0.08.
<81> The method of suppressing odor of a rosemary extract as a component (B) according to the above-mentioned item <80>, comprising blending the thyme extract, the basil extract, or the combination thereof as the component (C1) into the fat or oil composition, so that the ratio (content mass ratio) of the content of the component (C1) in the fat or oil composition to the content of the component (B) in the fat or oil composition, [(C1)/(B)], is 0.0004 or more, more preferably 0.001 or more, even more preferably 0.002 or more, is 0.05 or less, more preferably 0.03 or less, more preferably 0.019 or less, more preferably 0.018 or less, even more preferably 0.017 or less, and is 0.0004 to 0.05, more preferably from 0.0004 to 0.03, more preferably from 0.001 to 0.03, more preferably from 0.002 to 0.03, more preferably from 0.002 to 0.019, more preferably from 0.002 to 0.018, even more preferably from 0.002 to 0.017.
<82> A method of suppressing odor of a rosemary extract as a component (B), comprising blending one or two or more, as a component (C2), selected from the group consisting of a clove extract, an oregano extract, and a bay laurel extract into a fat or oil composition containing the rosemary extract as the component (B) at a content of from 0.005 to 0.25 mass% and containing, as a component (A), a fat or oil in which the total content of eicosapentaenoic acid and docosahexaenoic acid in constituent fatty acids of the fat or oil is 0.1 mass% or more and 20 mass% or less, that is, from 0.1 to 20 mass%, with respect to the total constituent fatty acids of the fat or oil, so that the content of the one or two or more, as the component (C2), selected from the group consisting of the clove extract, the oregano extract, and the bay laurel extract is from 0.00001 to 0.001 mass%, and the content mass ratio of the content of the component (C2) to the content of the rosemary extract as the component (B), [(C2)/(B)], is from 0.0001 to 0.03.
<83> The method of suppressing odor of a rosemary extract as a component (B) according to the above-mentioned item <82>, comprising blending the one or two or more, as the component (C2), selected from the group consisting of the clove extract, the oregano extract, and the bay laurel extract into the fat or oil composition, so that the ratio (content mass ratio) of the content of the component (C2) in the fat or oil composition to the content of the component (B) in the fat or oil composition, [(C2)/(B)], is 0.0004 or more, even more preferably 0.001 or more, is 0.019 or less, more preferably 0.018 or less, more preferably 0.017 or less, even more preferably 0.007 or less, and is from 0.0001 to 0.018, more preferably from 0.0001 to 0.017, more preferably from 0.0004 to 0.017, even more preferably from 0.001 to 0.007.

### Examples

### (Analysis Methods)

### (1) Composition of Glycerides in Fat or oil

About 10 mg of a fat or oil sample and 0.5 mL of a trimethylsilylating agent ("Silylating agent TH," manufactured by Kanto Chemical Co., Inc.) were placed in a glass sample bottle, and the bottle was sealed and heated at 70°C for 15 minutes. 1.0 mL of water and 1.5 mL of hexane were added thereto, and the bottle was shaken. The bottle was allowed to stand still, and then the upper layer was analyzed by gas-liquid chromatography (GLC). <GLC Analysis Conditions>

### (Conditions)

Apparatus: Agilent 6890 Series (manufactured by Agilent Technologies)
Integrator: ChemStation B.02.01 SR2 (manufactured by Agilent Technologies)
Column: DB-1ht (manufactured by Agilent J&W)
Carrier gas: 1.0 mL He/min
Injector: Split (1:50), T=320°C
Detector: FID, T=350°C
Oven temperature: The temperature was raised from 80°C to 340°C at 10°C/min, and kept for 15 minutes.

### (2) Composition of Constituent Fatty Acids in Fat or oil

Fatty acid methyl esters were prepared in accordance with "Preparation method for fatty acid methyl ester (2.4.1.-1996)" described in "Standard Methods for the Analysis of Fats, Oils and Related Materials" edited by Japan Oil Chemists' Society, and the resultant fat or oil samples were subjected to measurement in accordance with American Oil Chemists. Society Official Method Ce 1f-96 (GLC method).

### <GLC Analysis Conditions>

Column: CP-SIL88 100 m×0.25 mm×0.2 µm (VARIAN)
Carrier gas: 1.0 mL He/min
Injector: Split (1:200), T=250°C
Detector: FID, T=250°C
Oven temperature: The temperature was kept at 174°C for 50 minutes, raised to 220°C at 5°C/min, and kept for 25 minutes.

### (Raw Materials)

Fats or oils having the compositions shown in Table 1 (fat or oil a: NISSUI DHA-27 (manufactured by Nippon Suisan Kaisha, Ltd.) and a fat or oil b: rapeseed salad oil (manufactured by The Nisshin OilliO Group, Ltd.)) were used as the fats or oils a and b as the component (A).

Preparations (RME-1 and RME-2, and SE-1 to SE-4) shown in Table 2 were used as the rosemary extract as the component (B) and the thyme extract and the basil extract as the component (C1).

Preparations (OE-1 to OE-5) shown in Table 3 were used as the clove extract, the oregano extract, and the bay laurel extract as the component (C2).

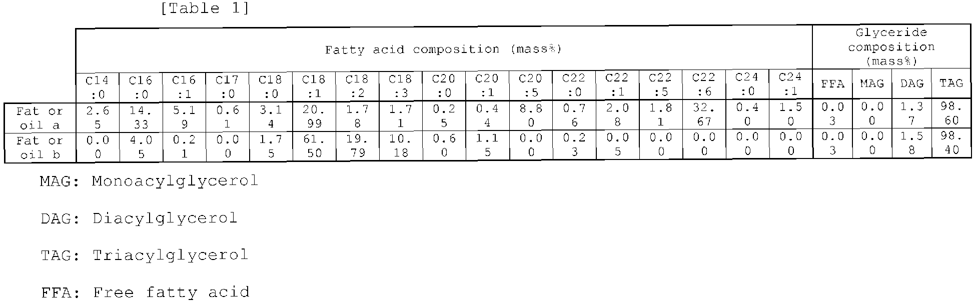

**[Table 2]**

| | Abbreviated name | Company name | Name | Content of extract in preparation [mass%] |
|---|---|---|---|---|
| Rosemary extract | RME-1 | KALSEC | Herbalox HT-O | 40 |
| | RME-2 | Mitsubishi-Kagaku Foods Corporation | RM Keeper OS | 20 |
| Thyme extract | SE-1 | Ogawa & Co., Ltd. | Spice OG Thyme | 10 |
| | SE-2 | T. HASEGAWA CO., LTD. | Thyme Flavor FH-3910 | 5 |
| Basil extract | SE-3 | Ogawa & Co., Ltd. | Spice OG Basil | 10 |
| | SE-4 | T. HASEGAWA CO., LTD. | Basil Flavor FH-4346 | 1 |

**[Table 3]**

| | Abbreviated name | Company name | Name | Content of extract in preparation [mass%] |
|---|---|---|---|---|
| Clove extract | OE-1 | Ogawa & Co., Ltd. | Spice OG Clove | 10 |
| | OE-2 | T. HASEGAWA CO., LTD. | Clove Flavor FH-4345 | 5 |
| Oregano extract | OE-3 | T. HASEGAWA CO., LTD. | Oregano Flavor FH-3909 | 5 |
| Bay laurel extract | OE-4 | Ogawa & Co., Ltd. | Spice OG Laurel | 10 |
| | OE-5 | T. HASEGAWA CO., LTD. | Laurel Flavor FH-3912 | 3 |

### Examples 1 to 10 and Comparative Examples 1 to 3

### (Preparation of Fat or oil Compositions)

The fat or oil a, the fat or oil b, the rosemary extract (RME-1), the thyme extract (SE-1), the basil extract (SE-3), and mixed tocopherols (manufactured by Archer Daniels Midland) were mixed to prepare fat or oil compositions, respectively. The total contents of eicosapentaenoic acid (C20:5) and docosahexaenoic acid (C22:6) in constituent fatty acids of the fats or oils in the fat or oil compositions (total amount: 100 mass%), and the contents of the rosemary extract, the contents of the thyme extract, the contents of the basil extract, and the contents of the mixed tocopherols in the fat or oil compositions are as shown in Table 4. It should be noted that the blending amounts of the rosemary extract, the thyme extract, and the basil extract in the preparations were determined from the contents of the extracts in the preparations shown in Table 2 so as to achieve the contents shown in Table 4.

### (Evaluation of Oxidative stability)

The fat or oil compositions shown in Table 4 were used to evaluate oxidative stability. The oxidative stability was evaluated in accordance with "CDM test (2.5.1.2-1996)" described in "Standard Methods for the Analysis of Fats, Oils and Related Materials" edited by Japan Oil Chemists' Society by calculating induction time (hr), and the results were each represented as an oxidative stability index (OSI). The results are shown in Table 4.

### (Thin Film Heating Test)

The fat or oil compositions shown in Table 4 were subjected to a thin film heating test. In the thin film heating test, 3 g of each of the fat or oil compositions was added to a stainless-steel petri dish with a diameter of 6 cm and placed on a hot plate heated to 150°C, and 10 minutes later, "degradation odor due to oxidation" was evaluated. Nine panelists evaluated their "degradation odor due to oxidation" in accordance with the following criteria, and mean values thereof were determined as scores. The results are shown in Table 4.

### (Degradation Odor due to Oxidation)

- 5:: Not sensed
- 4:: Hardly sensed
- 3:: Slightly sensed
- 2:: Sensed
- 1:: Strongly sensed

**[Table 4]**

| | | Example | | | | | | | | | | Comparative Example | | |
|---|---|---|---|---|---|---|---|---|---|---|---|---|---|---|
| | | 1 | 2 | 3 | 4 | 5 | 6 | 7 | 8 | 9 | 10 | 1 | 2 | 3 |
| Fat or oil a | | 4.8 | 4.8 | 4.8 | 4.8 | 4.8 | 4.8 | 1.2 | 1.2 | 1.2 | 12.1 | 4.8 | 12.1 | 4.8 |
| Fat or oil b | | 95.2 | 95.2 | 95.2 | 95.2 | 95.2 | 95.2 | 98.8 | 98.8 | 98.8 | 87.9 | - | - | - |
| (A) Ratio in fat or oil | [mass%] | | | | | | | | | | | | | |
| C20:5+C22:6 | | 2 | 2 | 2 | 2 | 2 | 2 | 0.5 | 0.5 | 0.5 | 5 | 2 | 5 | 2 |
| (B) RME-1 | [Mass ppm] | 100 | 300 | 500 | 800 | 1,000 | 2,000 | 100 | 250 | 500 | 1,000 | 10 | 10 | 10 |
| (C1) SE-1 | [Mass ppm] | 1 | 0 | 5 | 0 | 10 | 0 | 1 | 0 | 5 | 0 | 0 | 0 | 0 |
| (C1) SE-3 | [Mass ppm] | 0 | 3 | 0 | 8 | 0 | 20 | 0 | 2.5 | 0 | 10 | 0 | 0 | 0 |
| (B)/(C20:5+C22 : 6) | [Mass ratio] | 0.0050 | 0.0150 | 0.0250 | 0.0400 | 0.0500 | 0.1000 | 0.0200 | 0.0500 | 0.1000 | 0.0200 | 0.0005 | 0.0002 | 0.0005 |
| (C1) / (B) | [Mass ratio] | 0.0100 | 0.0100 | 0.0100 | 0.0100 | 0.0100 | 0.0100 | 0.0100 | 0.0100 | 0.0100 | 0.0100 | - | - | - |
| Mixed tocopherols | [Mass ppm] | - | - | - | - | - | - | - | - | - | - | - | - | 1,000 |
| | | | | | | | | | | | | | | |
| OSI | | 1.4 | 1.9 | 2.6 | 3.2 | 3.6 | 4.8 | 1.6 | 2.1 | 2.8 | 1.3 | 1.1 | 1.0 | 1.1 |
| Degradation odor due to oxidation | | 4 | 5 | 5 | 5 | 5 | 5 | 5 | 5 | 5 | 5 | 2 | 1 | 3 |

As is apparent from the results shown in Table 4, it was confirmed that the fat or oil compositions of the present invention had high oxidative stability, and had less suppressed degradation odor at the time of heating as well.

### Examples 11 to 38 and Comparative Examples 4 to 7

### (Preparation of Fat or oil Compositions)

The fat or oil a, the fat or oil b, the rosemary extract (RME-1), and the thyme extract (SE-1) were mixed to prepare fat or oil compositions, respectively. The total contents of eicosapentaenoic acid (C20:5) and docosahexaenoic acid (C22:6) in constituent fatty acids of the fats or oils in the fat or oil compositions (total amount: 100 mass%), and the contents of the rosemary extract, and the contents of the thyme extract in the fat or oil compositions are as shown in Table 5. It should be noted that the amounts of the rosemary extract and the thyme extract in the preparations were determined from the contents of the extracts in the preparations shown in Table 2 so as to achieve the contents shown in Table 5.

### Examples 39 to 66 and Comparative Examples 8 to 11

### (Preparation of Fat or oil Compositions)

The fat or oil a, the fat or oil b, the rosemary extract (RME-1), and the basil extract (SE-3) were mixed to prepare fat or oil compositions, respectively. The total contents of eicosapentaenoic acid (C20:5) and docosahexaenoic acid (C22:6) in constituent fatty acids of the fats or oils in the fat or oil compositions (total amount: 100 mass%), and the contents of the rosemary extract, and the contents of the basil extract in the fat or oil compositions are as shown in Table 6. It should be noted that the amounts of the rosemary extract and the basil extract in the preparations were determined from the contents of the extracts in the preparations shown in Table 2 so as to achieve the contents shown in Table 6.

### (Thin Film Heating Test)

The fat or oil compositions shown in Tables 5 and 6 were subjected to the thin film heating test in the same manner as above to evaluate the "degradation odor due to oxidation". In addition, nine panelists evaluated their "odor derived from rosemary extract" and "odor derived from thyme extract" or "odor derived from basil extract" (referred to as "odor derived from plant extract") by the thin film heating test in the same manner as above in accordance with the following criteria, and mean values thereof were determined as scores. The results are shown in Tables 5 and 6.

### (Odor Derived from Rosemary Extract)

- 5:: Not sensed
- 4:: Hardly sensed
- 3:: Slightly sensed
- 2:: Sensed
- 1:: Strongly sensed

### (Odor Derived from Plant Extract)

- 5:: Not sensed
- 4:: Almost not sensed
- 3:: Slightly sensed
- 2:: Sensed
- 1:: Clearly sensed

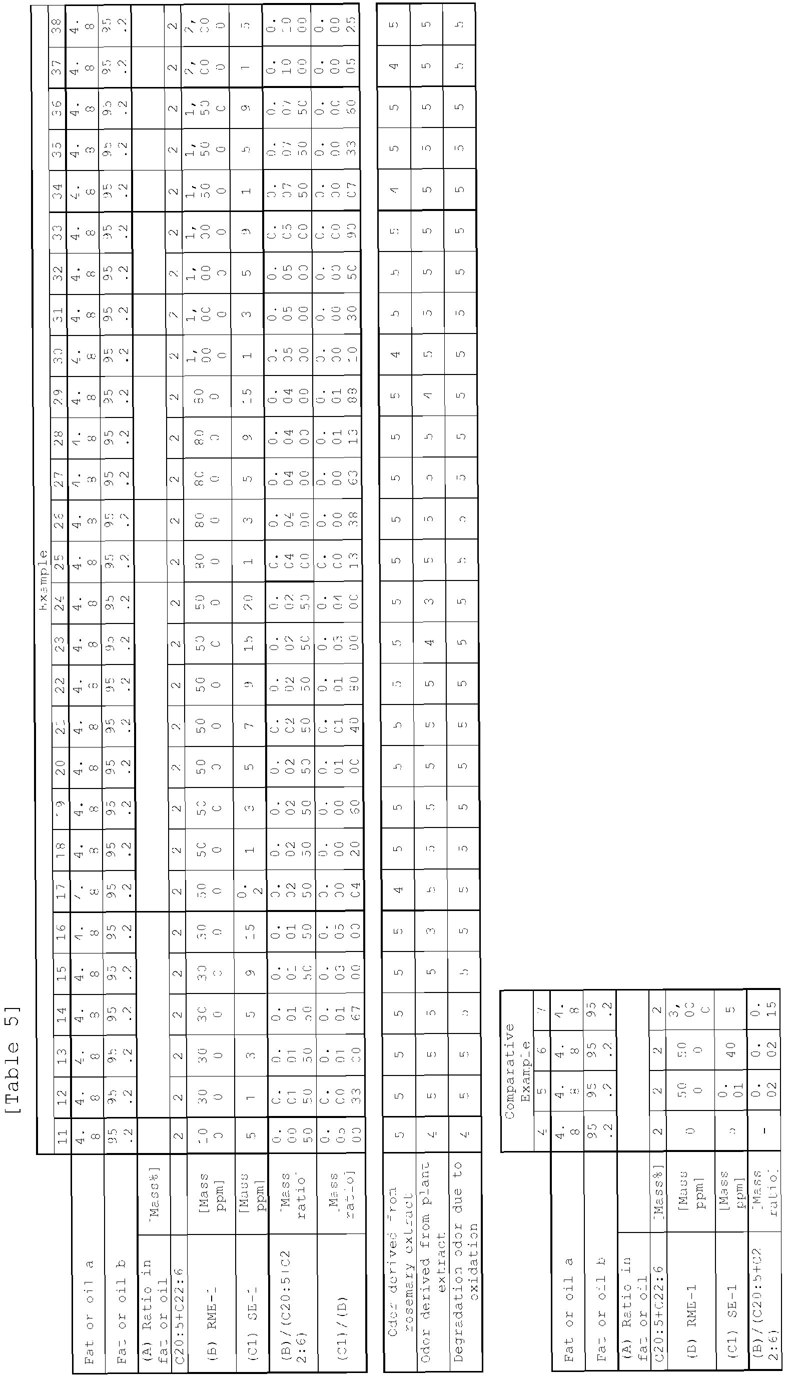

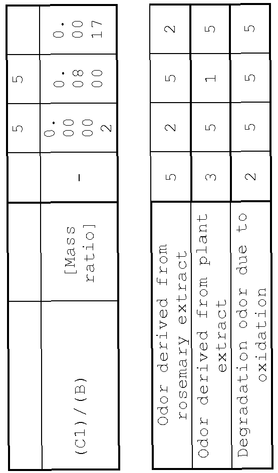

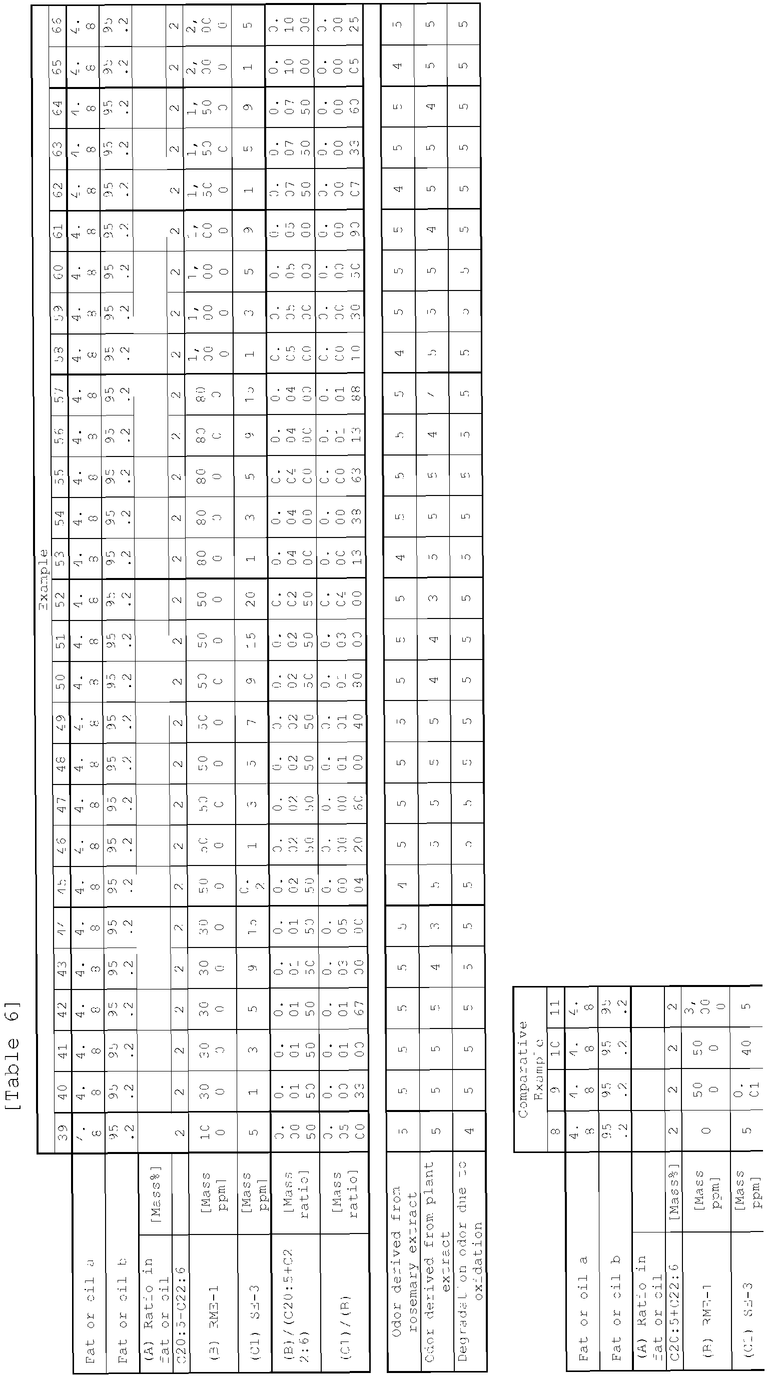

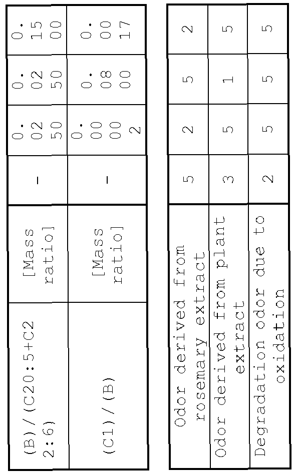

As is apparent from the results shown in Tables 5 and 6, it was confirmed that the fat or oil compositions of the present invention had less unpleasant odor peculiar to the rosemary extract, and had suppressed degradation odor due to oxidation of the fat or oil at the time of heating. In addition, the odor derived from the thyme extract or the basil extract was also hardly sensed.

### Examples 67 to 72 and Comparative Examples 12 and 13

### (Preparation of Fat or oil Compositions)

The fat or oil a, the fat or oil b, the rosemary extract (RME-1), the thyme extract (SE-1), and the basil extract (SE-3) were mixed to prepare fat or oil compositions, respectively. The total contents of eicosapentaenoic acid (C20:5) and docosahexaenoic acid (C22:6) in constituent fatty acids of the fats or oils in the fat or oil compositions (total amount: 100 mass%), and the contents of the rosemary extract, the contents of the thyme extract, and the contents of the basil extract in the fat or oil compositions are as shown in Table 7. It should be noted that the amounts of the rosemary extract, the thyme extract, and the basil extract in the preparations were determined from the contents of the extracts in the preparations shown in Table 2 so as to achieve the contents shown in Table 7.

### (Thin Film Heating Test)

The fat or oil compositions shown in Table 7 were subjected to the thin film heating test in the same manner as above to evaluate the "degradation odor due to oxidation." In addition, nine panelists evaluated their "odor derived from rosemary extract" and "odor derived from thyme extract" or "odor derived from basil extract" (referred to as "odor derived from plant extract") by the thin film heating test in the same manner as above in accordance with the following criteria, and mean values thereof were determined as scores. The results are shown in Table 7.

**[Table 7]**

| | | Example | | | | | | Comparative Example | |
|---|---|---|---|---|---|---|---|---|---|
| | | 67 | 68 | 69 | 70 | 71 | 72 | 12 | 13 |
| Fat or oil a | | 12.1 | 12.1 | 12.1 | 24.1 | 24.1 | 24.1 | 12.1 | 24.1 |
| Fat or oil b | | 87.9 | 87.9 | 87.9 | 75.9 | 75.9 | 75.9 | 87.9 | 75.9 |
| (A) Ratio in fat or oil | [Mass%] | | | | | | | | |
| C20:5+C22:6 | | 5 | 5 | 5 | 10 | 10 | 10 | 5 | 10 |
| (B) RME-1 | [Mass ppm] | 500 | 1,000 | 2,000 | 500 | 1,000 | 2,000 | 10 | 10 |
| (C1) SE-1 | [Mass ppm] | 5 | 0 | 5 | 0 | 5 | 0 | 5 | 0 |
| (C1) SE-3 | [Mass ppm] | 0 | 5 | 0 | 5 | 0 | 5 | 0 | 5 |
| (B) / (C20 : 5 + C22:6) | [Mass ratio] | 0.01 | 0.02 | 0.04 | 0.005 | 0.01 | 0.02 | 0.0002 | 0.0001 |
| (C1) / (B) | [Mass ratio] | 0.0100 | 0.0050 | 0.0025 | 0.0100 | 0.0050 | 0.0025 | 0.5000 | 0.5000 |
| | | | | | | | | | |
| Odor derived from rosemary extract | | 5 | 5 | 5 | 5 | 5 | 5 | 5 | 5 |
| Odor derived from plant extract | | 5 | 5 | 5 | 5 | 5 | 5 | 4 | 4 |
| Degradation odor due to oxidation | | 3 | 4 | 4 | 3 | 3 | 4 | 2 | 1 |

As is apparent from the results shown in Table 7, it was confirmed that the fat or oil compositions of the present invention had less unpleasant odor peculiar to the rosemary extract, and had suppressed degradation odor due to oxidation of the fat or oil at the time of heating. In addition, the odor derived from the thyme extract or the basil extract was also hardly sensed.

### Examples 73 to 88

### (Preparation of Fat or oil Compositions)

The fat or oil a, the fat or oil b, the rosemary extract (RME-1 or RME-2), the thyme extract (SE-1 or SE-2), and the basil extract (SE-3 or SE-4) were mixed to prepare fat or oil compositions, respectively. The total contents of eicosapentaenoic acid (C20:5) and docosahexaenoic acid (C22:6) in constituent fatty acids of the fats or oils in the fat or oil compositions (total amount: 100 mass%), and the contents of the rosemary extract, the contents of the thyme extract and the contents of the basil extract in the fat or oil compositions are as shown in Table 8 or 9. It should be noted that the amounts of the rosemary extract, the thyme extract, and the basil extract in the preparations were determined from the contents of the extracts in the preparations shown in Table 2 so as to achieve the contents shown in Table 8 or 9.

### (Thin Film Heating Test)

The fat or oil compositions shown in Table 8 or 9 were subjected to the thin film heating test in the same manner as above to evaluate the "degradation odor due to oxidation". In addition, nine panelists evaluated their "odor derived from rosemary extract" and "odor derived from thyme extract" or "odor derived from basil extract" (referred to as "odor derived from plant extract") by the thin film heating test in the same manner as above in accordance with the following criteria, and mean values thereof were determined as scores. The results are shown in Table 8 or 9.

**[Table 8]**

| | | Example | | | | | |
|---|---|---|---|---|---|---|---|
| | | 73 | 74 | 75 | 76 | 77 | 78 |
| Fat or oil a | | 4.8 | 4.8 | 4.8 | 4.8 | 4.8 | 4.8 |
| Fat or oil b | | 95.2 | 95.2 | 95.2 | 95.2 | 95.2 | 95.2 |
| (A) Ratio in fat or oil | [Mass%] | | | | | | |
| C20:5+C22:6 | | 2 | 2 | 2 | 2 | 2 | 2 |
| (B) RME-2 | [Mass ppm] | 500 | 500 | 500 | 500 | 500 | 500 |
| (C1) SE-1 | [Mass ppm] | 1 | 5 | 9 | - | - | - |
| (C1) SE-3 | [Mass ppm] | - | - | - | 1 | 5 | 9 |
| (B) / (C20:5 + C22:6) | [Mass ratio] | 0.025 | 0.025 | 0.025 | 0.025 | 0.025 | 0.025 |
| (C1) / (B) | [Mass ratio] | 0.0020 | 0.0100 | 0.0180 | 0.0020 | 0.0100 | 0.0180 |
| | | | | | | | |
| Odor derived from rosemary extract | | 5 | 5 | 5 | 5 | 5 | 5 |
| Odor derived from plant extract | | 5 | 5 | 4 | 5 | 5 | 4 |
| Degradation odor due to oxidation | | 5 | 5 | 5 | 5 | 5 | 5 |

**[Table 9]**

| | | Example | | | | | | | | | |
|---|---|---|---|---|---|---|---|---|---|---|---|
| | | 79 | 80 | 81 | 82 | 83 | 84 | 85 | 86 | 87 | 88 |
| Fat or oil a | | 4.8 | 4.8 | 4.8 | 4.8 | 4.8 | 4.8 | 4.8 | 4.8 | 4.8 | 4.8 |
| Fat or oil b | | 95.2 | 95.2 | 95.2 | 95.2 | 95.2 | 95.2 | 95.2 | 95.2 | 95.2 | 95.2 |
| (A) Ratio in fat or oil | [Mass%] | | | | | | | | | | |
| C20:5+C22:6 | | 2 | 2 | 2 | 2 | 2 | 2 | 2 | 2 | 2 | 2 |
| (B) RME-1 | [Mass ppm] | 500 | 500 | 500 | 500 | 500 | 500 | 500 | 500 | 500 | 500 |
| (C1) SE-2 | [Mass ppm] | 0.2 | 0.5 | 1 | 5 | 9 | - | - | - | - | - |
| (C1) SE-4 | [Mass ppm] | - | - | - | - | - | 0.2 | 0.5 | 1 | 5 | 9 |
| (B) / (C20:5+C22:6 ) | [Mass ratio] | 0.025 | 0.025 | 0.025 | 0.025 | 0.025 | 0.025 | 0.025 | 0.025 | 0.025 | 0.025 |
| (C1) / (B) | [Mass ratio] | 0.0004 | 0.0010 | 0.0020 | 0.0100 | 0.0180 | 0.0004 | 0.0010 | 0.0020 | 0.0100 | 0.0180 |
| | | | | | | | | | | | |
| Odor derived from rosemary extract | | 4 | 5 | 5 | 5 | 5 | 4 | 5 | 5 | 5 | 5 |
| Odor derived from plant extract | | 5 | 5 | 5 | 5 | 4 | 5 | 5 | 5 | 5 | 4 |
| Degradation odor due to oxidation | | 5 | 5 | 5 | 5 | 5 | 5 | 5 | 5 | 5 | 5 |

As is apparent from the results shown in Table 8 or 9, it was confirmed that the fat or oil compositions of the present invention had less unpleasant odor peculiar to the rosemary extract, and had suppressed degradation odor due to oxidation of the fat or oil at the time of heating. In addition, the odor derived from the thyme extract or the basil extract was also hardly sensed.

### Example 89

### (Preparation of Formulated Milk Powder)

The fat or oil a, the fat or oil b, the rosemary extract (RME-1), and the basil extract (SE-3) were mixed to prepare a fat or oil composition. The total content of eicosapentaenoic acid (C20:5) and docosahexaenoic acid (C22:6) in the constituent fatty acids of the fat or oil in the fat or oil composition (total amount: 100 mass%) was 2%, the content of the rosemary extract was 0.048%, and the content of the basil extract was 0.0005%.

10 g of the prepared fat or oil composition and 800 g of water were mixed with 90 g of commercially available powdered milk (the content of a fat or oil including milk fat was 27 mass% and the total content of eicosapentaenoic acid and docosahexaenoic acid in the fat or oil was 0.26 mass%), and the mixture was stirred, yielding an emulsified product. The resultant emulsified product was freeze-dried and pulverized, yielding powdered milk. The content of a fat or oil including milk fat in the powdered milk was 37%, the total content of eicosapentaenoic acid (C20:5) and docosahexaenoic acid (C22:6) in the constituent fatty acids of the fat or oil including milk fat in the powdered milk was 0.58%, the content of the rosemary extract in the powdered milk was 0.0048%, and the content of the basil extract in the powdered milk was 0.00005%.

### Comparative Example 14

### (Preparation of Formulated Milk Powder)

5% of the fat or oil a and 95% of the fat or oil b were mixed and to prepare a fat or oil composition.

10 g of the prepared fat or oil composition and 800 g of water were mixed with 90 g of commercially available powdered milk (the content of a fat or oil including milk fat was 27 mass% and the total content of eicosapentaenoic acid and docosahexaenoic acid in the fat or oil was 0.26 mass%), and the mixture was stirred, yielding an emulsified product. The resultant emulsified product was freeze-dried and pulverized, yielding powdered milk. The content of a fat or oil including milk fat in the powdered milk was 37%, and the total content of eicosapentaenoic acid (C20:5) and docosahexaenoic acid (C22:6) in the constituent fatty acids of the fat or oil including milk fat in the powdered milk was 0.62%.

### (Storage Test)

The powdered milk prepared in each of Example 89 and Comparative Example 14 was stored at 40°C for 4 days. The powdered milk after the storage was used to evaluate fishy odor.

Fishy odor was strongly sensed from the powdered milk of Comparative Example 14, in which the rosemary extract and the basil extract had not been added, while no fishy odor was sensed from the powdered milk of the present invention, in which the rosemary extract and the basil extract had been added, and hence have high oxidative stability. In addition, the odor peculiar to the rosemary extract was also hardly sensed from the powdered milk of the present invention.

### Examples 90 to 99 and Comparative Examples 15 to 17

### (Preparation of Fat or oil Compositions)

The fat or oil a, the fat or oil b, the rosemary extract (RME-1), the clove extract (OE-1), and mixed tocopherols (manufactured by Archer Daniels Midland) were mixed to prepare fat or oil compositions, respectively. The total contents of eicosapentaenoic acid (C20:5) and docosahexaenoic acid (C22:6) in constituent fatty acids of the fats or oils in the fat or oil compositions (total amount: 100 mass%), and the contents of the rosemary extract, the contents of the clove extract, and the contents of the mixed tocopherols in the fat or oil compositions are as shown in Table 10. It should be noted that the amounts of the rosemary extract and the clove extract in the preparations were determined from the contents of the extracts in the preparations shown in Tables 2 and 3 so as to achieve the contents shown in Table 10.

### (Evaluation of Oxidative stability)

The fat or oil compositions shown in Table 10 were used to evaluate oxidative stability. The oxidative stability was evaluated in accordance with "CDM test (2.5.1.2-1996)" described in "Standard Methods for the Analysis of Fats, Oils and Related Materials" edited by Japan Oil Chemists' Society by calculating induction time (hr), and the results were each represented as an oxidative stability index (OSI). The results are shown in Table 10.

### (Thin Film Heating Test)

The fat or oil compositions shown in Table 10 were subjected to a thin film heating test. In the thin film heating test, 3 g of each of the fat or oil compositions was added to a stainless-steel petri dish with a diameter of 6 cm and placed on a hot plate heated to 150°C, and 10 minutes later, "degradation odor due to oxidation" was evaluated. Nine panelists evaluated their "degradation odor due to oxidation" in accordance with the following criteria, and mean values thereof were determined as scores. The results are shown in Table 10.

### (Degradation Odor due to Oxidation)

- 5:: Not sensed
- 4:: Hardly sensed
- 3:: Slightly sensed
- 2:: Sensed
- 1:: Strongly sensed

**[Table 10]**

| | | Example | | | | | | | | | | Comparative Example | | |
|---|---|---|---|---|---|---|---|---|---|---|---|---|---|---|
| | | 90 | 91 | 92 | 93 | 94 | 95 | 96 | 97 | 98 | 99 | 15 | 16 | 17 |
| Fat or oil a | | 4.8 | 4.8 | 4.8 | 4.8 | 4.8 | 4.8 | 1.2 | 1.2 | 1.2 | 12.1 | 4.8 | 12.1 | 4.8 |
| Fat or oil b | | 95.2 | 95.2 | 95.2 | 95.2 | 95.2 | 95.2 | 98.8 | 98.8 | 98.8 | 87.9 | 95.2 | 87.9 | 95.2 |
| (A) Ratio in fat or oil | [Mass%] | | | | | | | | | | | | | |
| C20:5+C22:6 | | 2 | 2 | 2 | 2 | 2 | 2 | 0.5 | 0.5 | 0.5 | 5 | 2 | 5 | 2 |
| (B) RME-1 | [Mass ppm] | 100 | 300 | 500 | 800 | 1,000 | 2,000 | 100 | 250 | 500 | 1,000 | 10 | 10 | 10 |
| (C2) OE-1 | [Mass ppm] | 0.2 | 0.6 | 1 | 1.6 | 2 | 4 | 0.2 | 0.5 | 1 | 2 | 0 | 0 | 0 |
| (B) / (C20:5+C22:6 ) | [Mass ratio] | 0.0050 | 0.0150 | 0.0250 | 0.0400 | 0.0500 | 0.1000 | 0.0200 | 0.0500 | 0.1000 | 0.0200 | - | - | - |
| (C2) / (B) | [Mass ratio] | 0.0020 | 0.0020 | 0.0020 | 0.0020 | 0.0020 | 0.0020 | 0.0020 | 0.0020 | 0.0020 | 0.0020 | - | - | - |
| Mixed tocopherols | [Mass ppm] | - | - | - | - | - | - | - | - | - | - | - | - | 1,00 0 |
| | | | | | | | | | | | | | | |
| OSI | | 1.4 | 1.9 | 2.6 | 3.2 | 3.6 | 4.8 | 1.6 | 2.1 | 2.8 | 1.3 | 1.1 | 1.0 | 1.1 |
| Degradation odor due to oxidation | | 4 | 5 | 5 | 5 | 5 | 5 | 5 | 5 | 5 | 5 | 2 | 1 | 3 |

As is apparent from the results shown in Table 10, it was confirmed that the fat or oil compositions of the present invention had high oxidative stability, and had suppressed degradation odor at the time of heating as well.

### Examples 100 to 119 and Comparative Examples 18 to 21

### (Preparation of Fat or oil Compositions)

The fat or oil a, the fat or oil b, the rosemary extract (RME-1), and the clove extract (OE-1) were mixed to prepare fat or oil compositions, respectively. The total contents of eicosapentaenoic acid (C20:5) and docosahexaenoic acid (C22:6) in constituent fatty acids of the fats or oils in the fat or oil compositions (total amount: 100 mass%), and the contents of the rosemary extract, and the contents of the clove extract in the fat or oil compositions are as shown in Table 11. It should be noted that the amounts of the rosemary extract and the clove extract in the preparations were determined from the contents of the extracts in the preparations shown in Tables 2 and 3 so as to achieve the contents shown in Table 11.

### Examples 120 to 126 and Comparative Examples 22 to 25

### (Preparation of Fat or oil Compositions)

The fat or oil a, the fat or oil b, the rosemary extract (RME-1), and the oregano extract (OE-3) were mixed to prepare fat or oil compositions, respectively. The total contents of eicosapentaenoic acid (C20:5) and docosahexaenoic acid (C22:6) in constituent fatty acids of the fats or oils in the fat or oil compositions (total amount: 100 mass%), and the contents of the rosemary extract, and the contents of the oregano extract in the fat or oil compositions are as shown in Table 12. It should be noted that the blending amounts of the rosemary extract and the oregano extract in the preparations were determined from the contents of the extracts in the preparations shown in Tables 2 and 3 so as to achieve the contents shown in Table 12.

### Examples 127 to 133 and Comparative Examples 26 to 29

The fat or oil a, the fat or oil b, the rosemary extract (RME-1), and the bay laurel extract (OE-4) were mixed to prepare fat or oil compositions, respectively. The total contents of eicosapentaenoic acid (C20:5) and docosahexaenoic acid (C22:6) in constituent fatty acids of the fats or oils in the fat or oil compositions (total amount: 100 mass%), and the contents of the rosemary extract, and the contents of the the bay laurel extract in the fat or oil compositions are as shown in Table 13. It should be noted that the amounts of the rosemary extract and the bay laurel extract in the preparations were determined from the contents of the extracts in the preparations shown in Tables 2 and 3 so as to achieve the contents shown in Table 13.

### (Thin Film Heating Test)

The fat or oil compositions shown in Tables 11 to 13 were subjected to the thin film heating test in the same manner as above to evaluate the "degradation odor due to oxidation". In addition, nine panelists evaluated their "odor derived from rosemary extract", and "odor derived from clove extract", "odor derived from oregano extract", or "odor derived from bay laurel extract" (referred to as "odor derived from plant extract") by the thin film heating test in the same manner as above in accordance with the following criteria, and mean values thereof were determined as scores. The results are shown in Tables 11 to 13.

### (Odor Derived from Rosemary Extract)

- 5:: Not sensed
- 4:: Hardly sensed
- 3:: Slightly sensed
- 2:: Sensed
- 1:: Strongly sensed

### (Odor Derived from Plant Extract)

- 5:: Not sensed
- 4:: Hardly sensed
- 3:: Slightly sensed
- 2:: Sensed
- 1:: Strongly sensed

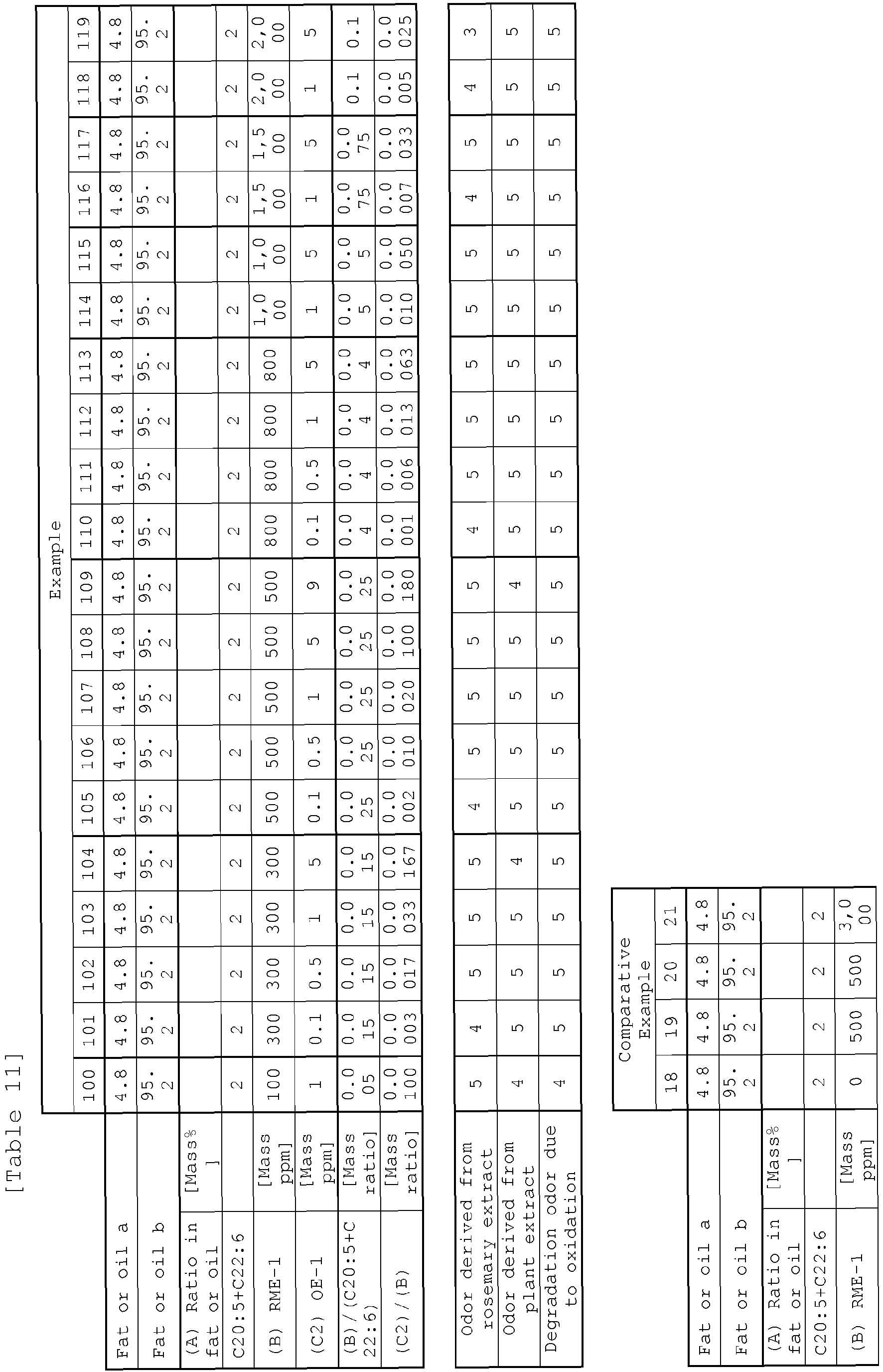

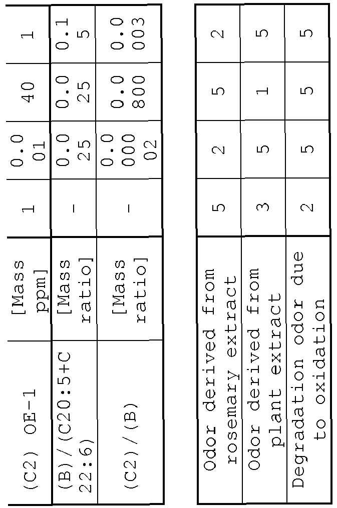

**[Table 12]**

| | | Example | | | | | | | Comparative Example | | | |
|---|---|---|---|---|---|---|---|---|---|---|---|---|
| | | 120 | 121 | 122 | 123 | 124 | 125 | 126 | 22 | 23 | 24 | 25 |
| Fat or oil a | | 4.8 | 4.8 | 4.8 | 4.8 | 4.8 | 4.8 | 4.8 | 4.8 | 4.8 | 4.8 | 4.8 |
| Fat or oil b | | 95.2 | 95.2 | 95.2 | 95.2 | 95.2 | 95.2 | 95.2 | 95.2 | 95.2 | 95.2 | 95.2 |
| (A) Ratio in fat or oil | [Mass%] | | | | | | | | | | | |
| C20:5+C22: 6 | | 2 | 2 | 2 | 2 | 2 | 2 | 2 | 2 | 2 | 2 | 2 |
| (B) RME-1 | [Mass ppm] | 300 | 300 | 500 | 500 | 500 | 1,000 | 1,000 | 0 | 500 | 500 | 3,000 |
| (C2) OE-3 | [Mass ppm] | 1 | 5 | 1 | 5 | 9 | 1 | 5 | 1 | 0.001 | 40 | 1 |
| (B) / (C20:5 +C22:6) | [Mass ratio] | 0.015 | 0.015 | 0.025 | 0.025 | 0.025 | 0.05 | 0.05 | - | 0.025 | 0.025 | 0.15 |
| (C2) / (B) | [Mass ratio] | 0.0033 | 0.0167 | 0.0020 | 0.0100 | 0.0180 | 0.0010 | 0.0050 | - | 0.0000 | 0.0800 | 0.0003 |
| | | | | | | | | | | | | |
| Odor derived from rosemary extract | | 5 | 5 | 5 | 5 | 5 | 5 | 5 | 5 | 2 | 5 | 2 |
| Odor derived from plant extract | | 5 | 4 | 5 | 4 | 4 | 5 | 4 | 2 | 5 | 1 | 5 |
| Degradation odor due to oxidation | | 5 | 5 | 5 | 5 | 5 | 5 | 5 | 2 | 5 | 5 | 5 |

**[Table 13]**

| | | Example | | | | | | | Comparative Example | | | |
|---|---|---|---|---|---|---|---|---|---|---|---|---|
| | | 127 | 128 | 129 | 130 | 131 | 132 | 133 | 26 | 27 | 28 | 29 |
| Fat or oil a | | 4.8 | 4.8 | 4.8 | 4.8 | 4.8 | 4.8 | 4.8 | 4.8 | 4.8 | 4.8 | 4.8 |
| Fat or oil b | | 95.2 | 95.2 | 95.2 | 95.2 | 95.2 | 95.2 | 95.2 | 95.2 | 95.2 | 95.2 | 95.2 |
| (A) Ratio in fat or oil | [Mass%] | | | | | | | | | | | |
| C20:5+C22:6 | | 2 | 2 | 2 | 2 | 2 | 2 | 2 | 2 | 2 | 2 | 2 |
| (B) RME-1 | [Mass ppm] | 300 | 300 | 500 | 500 | 500 | 1,000 | 1,000 | 0 | 500 | 500 | 3,000 |
| (C2) OE-4 | [Mass ppm] | 1 | 5 | 1 | 5 | 9 | 1 | 5 | 1 | 0.001 | 40 | 1 |
| (B)/(C20:5+C 22:6) | [Mass ratio] | 0.015 | 0.015 | 0.025 | 0.025 | 0.025 | 0.05 | 0.05 | - | 0.025 | 0.025 | 0.15 |
| (C2) / (B) | [Mass ratio] | 0.0033 | 0.0167 | 0.0020 | 0.0100 | 0.0180 | 0.0010 | 0.0050 | - | 0.000002 | 0.0800 | 0.0003 |
| | | | | | | | | | | | | |
| Odor derived from rosemary extract | | 5 | 5 | 5 | 5 | 5 | 4 | 4 | 5 | 2 | 5 | 2 |
| Odor derived from plant extract | | 4 | 4 | 4 | 4 | 3 | 4 | 4 | 3 | 5 | 1 | 5 |
| Degradation odor due to oxidation | | 5 | 5 | 5 | 5 | 5 | 5 | 5 | 2 | 5 | 5 | 5 |

As is apparent from the results shown in Tables 11 to 13, it was confirmed that the fat or oil compositions of the present invention had less unpleasant odor peculiar to the rosemary extract, and had suppressed degradation odor due to oxidation of the fat or oil at the time of heating. In addition, the odor derived from the clove extract, the oregano extract, or the bay laurel extract was also hardly sensed.

### Examples 134 to 149 and Comparative Examples 30 and 31

### (Preparation of Fat or oil Compositions)

The fat or oil a, the fat or oil b, the rosemary extract (RME-1 or RME-2), the clove extract (OE-1 or OE-2), and the bay laurel extract (OE-5) were mixed to prepare fat or oil compositions, respectively. The total contents of eicosapentaenoic acid (C20:5) and docosahexaenoic acid (C22:6) in constituent fatty acids of the fats or oils in the fat or oil compositions (total amount: 100 mass%), and the contents of the rosemary extract, the contents of the clove extract, and the contents of the bay laurel extract in the fat or oil compositions are as shown in Tables 14 to 16. It should be noted that the amounts of the rosemary extract, the clove extract, and the bay laurel extract in the preparations were determined from the contents of the extracts in the preparations shown in Tables 2 and 3 so as to achieve the contents shown in Tables 14 to 16.

### (Thin Film Heating Test)

The fat or oil compositions shown in Tables 14 to 16 were subjected to the thin film heating test in the same manner as above to evaluate the "degradation odor due to oxidation." In addition, nine panelists evaluated their "odor derived from rosemary extract", and "odor derived from clove extract" or "odor derived from bay laurel extract" (referred to as "odor derived from plant extract") by the thin film heating test in the same manner as above in accordance with the following criteria, and mean values thereof were determined as scores. The results are shown in Tables 14 to 16.

**[Table 14]**

| | | Example | | | | | | Comparative Example | |
|---|---|---|---|---|---|---|---|---|---|
| | | 134 | 135 | 136 | 137 | 138 | 139 | 30 | 31 |
| Fat or oil a | | 12.1 | 12.1 | 12.1 | 24.1 | 24.1 | 24.1 | 12.1 | 24.1 |
| Fat or oil b | | 87.9 | 87.9 | 87.9 | 75.9 | 75.9 | 75.9 | 87.9 | 75.9 |
| (A) Ratio in fat or oil | [Mass%] | | | | | | | | |
| C20:5+C22:6 | | 5 | 5 | 5 | 10 | 10 | 10 | 5 | 10 |
| (B) RME-1 | [Mass ppm] | 500 | 1,000 | 2,000 | 500 | 1,000 | 2,000 | 10 | 10 |
| (C2) OE-1 | [Mass ppm] | 1 | 1 | 1 | 1 | 1 | 1 | 1 | 1 |
| (B) / (C20:5+C22:6 ) | [Mass ratio] | 0.0100 | 0.0200 | 0.0400 | 0.0050 | 0.0100 | 0.0200 | 0.0002 | 0.0001 |
| (C2) / (B) | [Mass ratio] | 0.0020 | 0.0010 | 0.0005 | 0.0020 | 0.0010 | 0.0005 | 0.1000 | 0.1000 |
| | | | | | | | | | |
| Odor derived from rosemary extract | | 5 | 5 | 5 | 5 | 5 | 5 | 5 | 5 |
| Odor derived from plant extract | | 5 | 5 | 5 | 5 | 5 | 5 | 4 | 4 |
| Degradation odor due to oxidation | | 3 | 4 | 4 | 3 | 3 | 4 | 2 | 1 |

**[Table 15]**

| | | Example | | |
|---|---|---|---|---|
| | | 140 | 141 | 142 |
| Fat or oil a | | 4.8 | 4.8 | 4.8 |
| Fat or oil b | | 95.2 | 95.2 | 95.2 |
| (A) Ratio in fat or oil | [Mass%] | | | |
| C20:5+C22:6 | | 2 | 2 | 2 |
| (B) RME-2 | [Mass ppm] | 500 | 500 | 500 |
| (C2) OE-1 | [Mass ppm] | 0.1 | 1 | 5 |
| (B) / (C20:5+C22:6) | [Mass ratio] | 0.025 | 0.025 | 0.025 |
| (C2) / (B) | [Mass ratio] | 0.0002 | 0.0020 | 0.0100 |
| | | | | |
| Odor derived from rosemary extract | | 5 | 5 | 5 |
| Odor derived from plant extract | | 5 | 5 | 4 |
| Degradation odor due to oxidation | | 5 | 5 | 5 |

**[Table 16]**

| | | Example | | | | | | |
|---|---|---|---|---|---|---|---|---|
| | | 143 | 144 | 145 | 146 | 147 | 148 | 149 |
| Fat or oil a | | 4.8 | 4.8 | 4.8 | 4.8 | 4.8 | 4.8 | 4.8 |
| Fat or oil b | | 95.2 | 95.2 | 95.2 | 95.2 | 95.2 | 95.2 | 95.2 |
| (A) Ratio in fat or oil | [Mass%] | | | | | | | |
| C20:5+C22:6 | | 2 | 2 | 2 | 2 | 2 | 2 | 2 |
| (B) RME-1 | [Mass ppm] | 500 | 500 | 500 | 500 | 500 | 500 | 500 |
| (C2) OE-2 | [Mass ppm] | 0.1 | 0.5 | 1 | 5 | - | - | - |
| (C2) OE-5 | [Mass ppm] | - | - | - | - | 0.1 | 1 | 5 |
| (B) / (C20:5+C22:6) | [Mass ratio] | 0.025 | 0.025 | 0.025 | 0.025 | 0.025 | 0.025 | 0.025 |
| (C2) / (B) | [Mass ratio] | 0.0002 | 0.0010 | 0.0020 | 0.0100 | 0.0002 | 0.0020 | 0.0100 |
| | | | | | | | | |
| Odor derived from rosemary extract | | 4 | 5 | 5 | 5 | 4 | 5 | 5 |
| Odor derived from plant extract | | 5 | 5 | 5 | 4 | 5 | 5 | 4 |
| Degradation odor due to oxidation | | 5 | 5 | 5 | 5 | 5 | 5 | 5 |

As is apparent from the results shown in Tables 14 to 16, it was confirmed that the fat or oil compositions of the present invention had less unpleasant odor peculiar to the rosemary extract, and had suppressed degradation odor due to oxidation of the fat or oil at the time of heating. In addition, the odor derived from the clove extract or the bay laurel extract was also hardly sensed.

## Claims

1. A fat or oil composition,
comprising the following components (A), (B), and (C1) :
(A) a fat or oil in which a total content of eicosapentaenoic acid and docosahexaenoic acid in constituent fatty acids of the fat or oil is from 0.1 to 20 mass% with respect to total constituent fatty acids of the fat or oil;
(B) a rosemary extract at a content of from 0.005 to 0.25 mass%; and
(C1) a thyme extract, a basil extract, or a combination thereof at a content of from 0.00001 to 0.0025 mass%;
wherein a content mass ratio of the content of the component (C1) to the content of the rosemary extract as the component (B), [(C1)/(B)], is from 0.0003 to 0.08,
or comprising the following components (A), (B), and (C2) :
(A) a fat or oil in which a total content of eicosapentaenoic acid and docosahexaenoic acid in constituent fatty acids of the fat or oil is from 0.1 to 20 mass% with respect to total constituent fatty acids of the fat or oil;
(B) a rosemary extract at a content of from 0.005 to 0.25 mass%; and
(C2) at least one selected from the group consisting of a clove extract, an oregano extract, and a bay laurel extract at a content of from 0.00001 to 0.001 mass%;
wherein a content mass ratio of the content of the component (C2) to the content of the rosemary extract as the component (B), [(C2)/(B)], is from 0.0001 to 0.03.

2. The fat or oil composition according to claim 1, wherein a content mass ratio of the content of the component (C1) to the content of the rosemary extract as the component (B), [(C1)/(B)], is from 0.002 to 0.019.

3. The fat or oil composition according to claim 1 or 2, wherein a content mass ratio of the content of the rosemary extract as the component (B) in the fat or oil composition to the total content of eicosapentaenoic acid and docosahexaenoic acid in the constituent fatty acids of the fat or oil as the component (A), [(B)/(C20:5+C22:6)], is from 0.004 to 0.15.

4. The fat or oil composition according to claim 1 or 2, wherein a content mass ratio of the content of the rosemary extract as the component (B) in the fat or oil composition to the total content of eicosapentaenoic acid and docosahexaenoic acid in the constituent fatty acids of the fat or oil as the component (A), [(B)/(C20:5+C22:6)], is from 0.01 to 0.1.

5. The fat or oil composition according to claim 1, wherein a content mass ratio of the content of the component (C2) to the content of the rosemary extract as the component (B), [(C2)/(B)], is from 0.0001 to 0.018.

6. The fat or oil composition according to claim 1 or 5, wherein a content mass ratio of the content of the rosemary extract as the component (B) in the fat or oil composition to the total content of eicosapentaenoic acid and docosahexaenoic acid in the constituent fatty acids of the fat or oil as the component (A), [(B)/(C20:5+C22:6)], is from 0.01 to 0.08.

7. The fat or oil composition according to any one of claims 1 to 6, wherein the component (A) comprises at least one of fats or oils selected from the group consisting of fish oil and algae oil.

8. The fat or oil composition according to any one of claims 1 to 7, wherein the content of the rosemary extract as the component (B) is from 0.01 to 0.2 mass%.

9. The fat or oil composition according to any one of claims 1 to 7, wherein the content of the rosemary extract as the component (B) is from 0.02 to 0.17 mass%.

10. The fat or oil composition according to any one of claims 1 to 9, comprising 95 to 99.95 mass% of the fat or oil as the component (A).

11. The fat or oil composition according to any one of claims 1 to 10, wherein a content of triacylglycerols in the fat or oil as the component (A) is from 78 to 100 mass%.

12. A formulated milk powder, comprising: the fat or oil composition according to any one of claims 1 to 11, and at least one component selected from the group consisting of lactose, whey protein, casein, and milk phospholipid.

13. A method of improving the oxidative stability of a fat or oil composition,
comprising blending a rosemary extract as a component (B) and a thyme extract, a basil extract, or a combination thereof as a component (C1) into a fat or oil composition containing, as a component (A), a fat or oil in which the total content of eicosapentaenoic acid and docosahexaenoic acid in constituent fatty acids of the fat or oil is from 0.1 to 20 mass% with respect to the total constituent fatty acids of the fat or oil, so that the content of the rosemary extract as the component (B) is from 0.005 to 0.25 mass%, the content of the thyme extract, the basil extract, or the combination thereof as the component (C1) is from 0.00001 to 0.0025 mass%, and the content mass ratio of the content of the component (C1) to the content of the rosemary extract as the component (B), [(C1)/(B)], is from 0.0003 to 0.08,
or comprising blending a rosemary extract as a component (B) and at least one, as a component (C2), selected from a clove extract, an oregano extract, and a bay laurel extract into a fat or oil composition containing, as a component (A), a fat or oil in which the total content of eicosapentaenoic acid and docosahexaenoic acid in constituent fatty acids of the fat or oil is from 0.1 to 20 mass% with respect to the total constituent fatty acids of the fat or oil, so that the content of the rosemary extract as the component (B) is from 0.005 to 0.25 mass%, the content of at least one, as the component (C2), selected from the group consisting of the clove extract, the oregano extract, and the bay laurel extract is from 0.00001 to 0.001 mass%, and the content mass ratio of the content of the component (C2) to the content of the rosemary extract as the component (B), [(C2)/(B)], is from 0.0001 to 0.03.

14. A method of suppressing odor of a rosemary extract as a component (B),
comprising blending a thyme extract, a basil extract, or a combination thereof as a component (C1) into a fat or oil composition containing the rosemary extract as the component (B) at a content of from 0.005 to 0.25 mass% and containing, as a component (A), a fat or oil in which the total content of eicosapentaenoic acid and docosahexaenoic acid in constituent fatty acids of the fat or oil is 0.1 mass% or more and 20 mass% or less, that is, from 0.1 to 20 mass%, with respect to the total constituent fatty acids of the fat or oil, so that the content of the thyme extract, the basil extract, or the combination thereof as the component (C1) is from 0.00001 to 0.0025 mass%, and the content mass ratio of the content of the component (C1) to the content of the rosemary extract as the component (B), [(C1)/(B)], is from 0.0003 to 0.08,
or comprising blending at least one, as a component (C2), selected from the group consisting of a clove extract, an oregano extract, and a bay laurel extract into a fat or oil composition containing the rosemary extract as the component (B) at a content of from 0.005 to 0.25 mass% and containing, as a component (A), a fat or oil in which the total content of eicosapentaenoic acid and docosahexaenoic acid in constituent fatty acids of the fat or oil is 0.1 mass% or more and 20 mass% or less, that is, from 0.1 to 20 mass%, with respect to the total constituent fatty acids of the fat or oil, so that the content of at least one, as the component (C2), selected from the group consisting of the clove extract, the oregano extract, and the bay laurel extract is from 0.00001 to 0.001 mass%, and the content mass ratio of the content of the component (C2) to the content of the rosemary extract as the component (B), [(C2)/(B)], is from 0.0001 to 0.03.

## Patentansprüche

1. Fett- oder Ölzusammensetzung,
umfassend die folgenden Komponenten (A), (B) und (C1):
(A) ein Fett oder Öl, bei dem der Gesamtgehalt an Eicosapentaensäure und Docosahexaensäure in den Fettsäurebestandteilen des Fetts oder Öls 0,1 bis 20 Massen-%, bezogen auf die gesamten Fettsäurebestandteile des Fetts oder Öls, beträgt;
(B) ein Rosmarin-Extrakt zu einem Gehalt von 0,005 bis 0,25 Massen-%; und
(C1) ein Thymian-Extrakt, ein Basilikum-Extrakt oder eine Kombination davon zu einem Gehalt von 0,00001 bis 0,0025 Massen-%;
wobei ein Gehaltsmassenverhältnis von dem Gehalt der Komponente (C1) zu dem Gehalt des Rosmarin-Extrakts als Komponente (B), [(C1)/(B)], 0,0003 bis 0,08 beträgt,
oder umfassend die folgenden Komponenten (A), (B) und (C2) :
(A) ein Fett oder Öl, bei dem der Gesamtgehalt an Eicosapentaensäure und Docosahexaensäure in den Fettsäurebestandteilen des Fetts oder Öls 0,1 bis 20 Massen-%, bezogen auf die gesamten Fettsäurebestandteile des Fetts oder Öls, beträgt;
(B) ein Rosmarin-Extrakt zu einem Gehalt von 0,005 bis 0,25 Massen-%; und
(C2) mindestens ein Vertreter, ausgewählt aus der Gruppe, bestehend aus einem Nelken-Extrakt, einem Oregano-Extrakt und einem Lorbeer-Extrakt, zu einem Gehalt von 0,00001 bis 0,001 Massen-%;
wobei das Gehaltsmassenverhältnis vom dem Gehalt der Komponente (C2) zu dem Gehalt des Rosmarin-Extrakts als Komponente (B), [(C2)/(B)], 0,0001 bis 0,03 beträgt.

2. Fett- oder Ölzusammensetzung gemäß Anspruch 1, wobei ein Gehaltsmassenverhältnis vom dem Gehalt der Komponente (C1) zu dem Gehalt des Rosmarin-Extrakts als Komponente (B), [(C1)/(B)], 0,002 bis 0,019 beträgt.

3. Fett- oder Ölzusammensetzung gemäß Anspruch 1 oder 2, wobei ein Gehaltsmassenverhältnis von dem Gehalt des Rosmarin-Extrakts als Komponente (B) in der Fett- oder Ölzusammensetzung zu dem Gesamtgehalt an Eicosapentaensäure und Docosahexaensäure in den Fettsäurebestandteilen des Fetts oder Öls als Komponente (A), [(B)/(C20:5 + C22:6)], 0,004 bis 0,15 beträgt.

4. Fett- oder Ölzusammensetzung gemäß Anspruch 1 oder 2, wobei ein Gehaltsmassenverhältnis von dem Gehalt des Rosmarin-Extrakts als Komponente (B) in der Fett- oder Ölzusammensetzung zu dem Gesamtgehalt an Eicosapentaensäure und Docosahexaensäure in den Fettsäurebestandteilen des Fetts oder Öls als Komponente (A), [(B)/(C20:5 + C22:6)], 0,01 bis 0,1 beträgt.

5. Fett- oder Ölzusammensetzung gemäß Anspruch 1, wobei ein Gehaltsmassenverhältnis von dem Gehalt der Komponente (C2) zu dem Gehalt des Rosmarin-Extrakts als Komponente (B), [(C2)/(B)], 0,0001 bis 0,018 beträgt.

6. Fett- oder Ölzusammensetzung gemäß Anspruch 1 oder 5, wobei ein Gehaltsmassenverhältnis von dem Gehalt des Rosmarin-Extrakts als Komponente (B) in der Fett- oder Ölzusammensetzung zu dem Gesamtgehalt an Eicosapentaensäure und Docosahexaensäure in den Fettsäurebestandteilen des Fetts oder Öls als Komponente (A), [(B)/(C20:5 + C22:6)], 0,01 bis 0,08 beträgt.

7. Fett- oder Ölzusammensetzung gemäß einem der Ansprüche 1 bis 6, wobei die Komponente (A) mindestens eines von Fetten oder Ölen, ausgewählt aus der Gruppe, bestehend aus Fischöl und Algenöl, umfasst.

8. Fett- oder Ölzusammensetzung gemäß einem der Ansprüche 1 bis 7, wobei der Gehalt des Rosmarin-Extrakts als Komponente (B) 0,01 bis 0,2 Massen-% beträgt.

9. Fett- oder Ölzusammensetzung gemäß einem der Ansprüche 1 bis 7, wobei der Gehalt des Rosmarin-Extrakts als Komponente (B) 0,02 bis 0,17 Massen-% beträgt.

10. Fett- oder Ölzusammensetzung gemäß einem der Ansprüche 1 bis 9, umfassend 95 bis 99,95 Massen-% des Fetts oder Öls als Komponente (A).

11. Fett- oder Ölzusammensetzung gemäß einem der Ansprüche 1 bis 10, wobei ein Gehalt an Triacylglycerinen in dem Fett oder Öl als Komponente (A) 78 bis 100 Massen-% beträgt.

12. Formuliertes Milchpulver, umfassend: die Fett- oder Ölzusammensetzung gemäß einem der Ansprüche 1 bis 11 und mindestens eine Komponente, ausgewählt aus der Gruppe, bestehend aus Lactose, Molkeprotein, Casein und Milchphospholipid.

13. Verfahren zur Verbesserung der Oxidationsstabilität einer Fett- oder Ölzusammensetzung,
umfassend das Mischen von einem Rosmarin-Extrakt als Komponente (B) und einem Thymian-Extrakt, einem Basilikum-Extrakts oder einer Kombination davon als Komponente (C1) in eine Fett- oder Ölzusammensetzung, die als Komponente (A) ein Fett oder Öl enthält, bei dem der Gesamtgehalt an Eicosapentaensäure und Docosahexaensäure in den Fettsäurebestandteilen des Fetts oder Öls 0,1 bis 20 Massen-%, bezogen auf die gesamten Fettsäurebestandteile des Fetts oder Öls, beträgt, so dass der Gehalt des Rosmarin-Extrakts als Komponente (B) 0,005 bis 0,25 Massen-% beträgt, der Gehalt des Thymian-Extrakts, des Basilikum-Extrakts oder der Kombination davon als Komponente (C1) 0,00001 bis 0,0025 Massen-% beträgt, und das Gehaltsmassenverhältnis von dem Gehalt der Komponente (C1) zu dem Gehalt des Rosmarin-Extrakts als Komponente (B), [(C1)/(B)], 0,0003 bis 0,08 beträgt,
oder umfassend das Mischen von einem Rosmarin-Extrakt als Komponente (B) und mindestens einem Vertreter, ausgewählt aus einem Nelken-Extrakt, einem Oregano-Extrakt und einem Lorbeer-Extrakt, als Komponente (C2) in eine Fett- oder Ölzusammensetzung, die als Komponente (A) ein Fett oder Öl enthält, bei dem der Gesamtgehalt an Eicosapentaensäure und Docosahexaensäure in den Fettsäurebestandteilen des Fetts oder Öls 0,1 bis 20 Massen-%, bezogen auf die gesamten Fettsäurebestandteile des Fetts oder Öls, beträgt, so dass der Gehalt des Rosmarin-Extrakts als Komponente (B) 0,005 bis 0,25 Massen-% beträgt, der Gehalt des mindestens einen Vertreters, ausgewählt aus der Gruppe, bestehend aus dem Nelken-Extrakt, dem Oregano-Extrakt und dem Lorbeer-Extrakt, als Komponente (C2) 0,00001 bis 0,001 Massen-% beträgt, und das Gehaltsmassenverhältnis von dem Gehalt der Komponente (C2) zu dem Gehalt des Rosmarin-Extrakts als Komponente (B), [(C2)/(B)], 0,0001 bis 0,03 beträgt.

14. Verfahren zur Unterdrückung des Geruchs eines Rosmarin-Extrakts als Komponente (B),
umfassend das Mischen von einem Thymian-Extrakt, einem Basilikum-Extrakt oder einer Kombination davon als Komponente (C1) in eine Fett- oder Ölzusammensetzung, die den Rosmarin-Extrakt als Komponente (B) zu einem Gehalt von 0,005 bis 0,25 Massen-% enthält und als Komponente (A) ein Fett oder Öl enthält, bei dem der Gesamtgehalt an Eicosapentaensäure und Docosahexaensäure in den Fettsäurebestandteilen des Fetts oder Öls 0,1 Massen-% oder mehr und 20 Massen-% oder weniger, d.h. 0,1 bis 20 Massen-%, bezogen auf die gesamten Fettsäurebestandteile des Fetts oder Öls, beträgt, so dass der Gehalt des Thymian-Extrakts, des Basilikum-Extrakts oder der Kombination davon als Komponente (C1) 0,00001 bis 0,0025 Massen-% beträgt, und das Gehaltsmassenverhältnis von dem Gehalt der Komponente (C1) zu dem Gehalt des Rosmarin-Extrakts als Komponente (B), [(C1)/(B)], 0,0003 bis 0,08 beträgt,
oder umfassend das Mischen von mindestens einem Vertreter, ausgewählt der Gruppe, bestehend aus einem Nelken-Extrakt, einem Oregano-Extrakt und einem Lorbeer-Extrakt, als Komponente (C2) in eine Fett- oder Ölzusammensetzung, die den Rosmarin-Extrakt als Komponente (B) zu einem Gehalt von 0,005 bis 0,25 Massen-% enthält und als Komponente (A) ein Fett oder Öl enthält, bei dem der Gesamtgehalt an Eicosapentaensäure und Docosahexaensäure in den Fettsäurebestandteilen des Fetts oder Öls 0,1 Massen-% oder mehr und 20 Massen-% oder weniger, d.h. 0,1 bis 20 Massen-%, bezogen auf die gesamten Fettsäurebestandteile des Fetts oder Öls, beträgt, so dass der Gehalt des mindestens einen Vertreters, ausgewählt aus der Gruppe, bestehend aus dem Nelken-Extrakt, dem Oregano-Extrakt und dem Lorbeer-Extrakt, als Komponente (C2) 0,00001 bis 0,001 Massen-% beträgt, und das Gehaltsmassenverhältnis von dem Gehalt der Komponente (C2) zu dem Gehalt des Rosmarin-Extrakts als Komponente (B), [(C2)/(B)], 0,0001 bis 0,03 beträgt.

## Revendications

1. Composition à base de matière grasse ou d'huile, comprenant les composants (A), (B), et (C1) suivants :
(A) une matière grasse ou une huile dans laquelle une teneur totale en acide eicosapentaénoïque et en acide docosahexaénoïque dans des acides gras constitutifs de la matière grasse ou de l'huile va de 0,1 à 20 % en masse par rapport aux acides gras constitutifs totaux de la matière grasse ou de l'huile ;
(B) un extrait de romarin dont la teneur va de 0,005 à 0,25 % en masse ; et
(C1) un extrait de thym, un extrait de basilic, ou une combinaison de ceux-ci dont la teneur va de 0,00001 à 0,0025 % en masse ;
dans laquelle un rapport massique de teneur entre la teneur en composant (C1) et la teneur en extrait de romarin en tant que composant (B), [C1)/(B)], va de 0,0003 à 0,08,
ou comprenant les composants (A), (B), et (C2) suivants :
(A) une matière grasse ou une huile dans laquelle une teneur totale en acide eicosapentaénoïque et en acide docosahexaénoïque dans des acides gras constitutifs de la matière grasse ou de l'huile va de 0,1 à 20 % en masse par rapport aux acides gras constitutifs totaux de la matière grasse ou de l'huile ;
(B) un extrait de romarin dont la teneur va de 0,005 à 0,25 % en masse ; et
(C2) au moins l'un sélectionné parmi le groupe constitué d'un extrait de clou de girofle, d'un extrait d'origan, d'un extrait de laurier dont la teneur va de 0,00001 à 0,001 % en masse ;
dans laquelle un rapport massique de teneur entre le composant (C2) et la teneur en extrait de romarin en tant que composant (B), [(C2)/(B)], va de 0,0001 à 0,03.

2. Composition à base de matière grasse ou d'huile selon la revendication 1, dans laquelle un rapport massique de teneur entre la teneur en composant (C1) et la teneur en extrait de romarin en tant que composant (B), [(C1)/(B)], va de 0,002 à 0,019.

3. Composition à base de matière grasse ou d'huile selon la revendication 1 ou 2, dans laquelle un rapport massique de teneur entre la teneur en extrait de romarin en tant que composant (B) dans la composition à base de matière grasse ou d'huile et la teneur totale en acide eicosapentaénoïque et en acide docosahexaénoïque dans les acides gras constitutifs de la matière grasse ou de l'huile en tant que composant (A), [(B)/(C20:5+C22:6)], va de 0,004 à 0,15.

4. Composition à base de matière grasse ou d'huile selon la revendication 1 ou 2, dans laquelle un rapport massique de teneur entre la teneur en extrait de romarin en tant que composant (B) dans la composition à base de matière grasse ou d'huile et la teneur totale en acide eicosapentaénoïque et en acide docosahexaénoïque dans les acides gras constitutifs de la matière grasse ou de l'huile en tant que composant (A), [(B)/(C20:5+C22:6)], va de 0,01 à 0,1.

5. Composition à base de matière grasse ou d'huile selon la revendication 1, dans laquelle un rapport massique de teneur entre la teneur en composant (C2) et la teneur en extrait de romarin en tant que composant (B), [(C2)/(B)], va de 0,0001 à 0,018.

6. Composition à base de matière grasse ou d'huile selon la revendication 1 ou 5, dans laquelle un rapport massique de teneur entre la teneur en extrait de romarin en tant que composant (B) dans la composition à base de matière grasse ou d'huile et la teneur totale en acide eicosapentaénoïque et en acide docosahexaénoïque dans les acides gras constitutifs de la matière grasse ou de l'huile en tant que composant (A), [(B)/(C20:5+C22:6)], va de 0,01 à 0,08.

7. Composition à base de matière grasse ou d'huile selon l'une quelconque des revendications 1 à 6, dans laquelle le composant (A) comprend au moins l'une parmi des matières grasses ou des huiles sélectionnées parmi le groupe constitué de l'huile de poisson et l'huile d'algues.

8. Composition à base de matière grasse ou d'huile selon l'une quelconque des revendications 1 à 7, dans laquelle la teneur en extrait de romarin en tant que composant (B) va de 0,01 à 0,2 % en masse.

9. Composition à base de matière grasse ou d'huile selon l'une quelconque des revendications 1 à 7, dans laquelle la teneur en extrait de romarin en tant que composant (B) va de 0,02 à 0,17 % en masse.

10. Composition à base de matière grasse ou d'huile selon l'une quelconque des revendications 1 à 9, comprenant de 95 à 99,95 % en masse de la matière grasse ou de l'huile en tant que composant (A).

11. Composition à base de matière grasse ou d'huile selon l'une quelconque des revendications 1 à 10, dans laquelle une teneur en triacylglycérols dans la matière grasse ou l'huile en tant que composant (A) va de 78 à 100 % en masse.

12. Préparation de lait en poudre, comprenant : la composition à base de matière grasse ou d'huile selon l'une quelconque des revendications 1 à 11, et au moins un composant sélectionné dans le groupe constitué du lactose, de la protéine de petit-lait, de la caséine, et d'un phospholipide lactique.

13. Procédé d'amélioration de la résistance à l'oxydation d'une composition à base de matière grasse ou d'huile :
comprenant le mélange d'un extrait romarin en tant que composant (B) et d'un extrait de thym, d'un extrait de basilic, ou d'une combinaison de ceux-ci en tant que composant (C1) dans une composition à base de matière grasse ou d'huile contenant, en tant que composant (A), une matière grasse ou une huile dont la teneur totale en acide eicosapentaénoïque et en acide docosahexaénoïque dans des acides gras constitutifs de la matière grasse ou de l'huile va de 0,1 à 20 % en masse par rapport aux acides gras constitutifs totaux de la matière grasse ou de l'huile, de sorte que la teneur en extrait de romarin en tant que composant (B) va de 0,005 à 0,25 % en masse, la teneur en extrait de thym, en extrait de basilic, ou la combinaison de ceux-ci en tant que composant (C1) va de 0,00001 à 0,0025 % en masse, et le rapport massique de teneur entre la teneur en composant (C1) et la teneur en extrait de romarin en tant que composant (B), [(C1)/(B)], va de 0,0003 à 0,08,
ou comprenant le mélange d'un extrait de romarin en tant que composant (B) et d'au moins l'un, en tant que composant (C2), sélectionné parmi un extrait de clou de girofle, un extrait d'origan, et un extrait de laurier dans une composition à base de matière grasse ou d'huile contenant, en tant que composant (A), une matière grasse ou une huile dans laquelle la teneur totale en acide eicosapentaénoïque et en acide docosahexaénoïque dans des acides gras constitutifs de la matière grasse ou de l'huile va de 0,1 à 20 % en masse par rapport aux acides gras constitutifs totaux de la matière grasse ou de l'huile, de sorte que la teneur en extrait de romarin en tant que composant (B) va de 0,005 à 0,25 % en masse, la teneur en au moins l'un, en tant que composant (C2), sélectionné parmi le groupe constitué de l'extrait de clou de girofle, l'extrait d'origan, et l'extrait de laurier va de 0,00001 à 0,001 % en masse, et le rapport massique de teneur entre la teneur en composant (C2) et la teneur en extrait de romarin en tant que composant (B), [(C2)/(B)], va de 0,0001 à 0,03.

14. Procédé de suppression d'une odeur d'un extrait de romarin en tant que composant (B),
comprenant le mélange d'un extrait de thym, d'un extrait de basilic, ou d'une combinaison de ceux-ci en tant que composant (C1) dans une composition à base de matière grasse ou d'huile contenant l'extrait de romarin en tant que composant (B) dont la teneur va de 0,005 à 0,25 % en masse et contenant, en tant que composant (A), une matière grasse ou une huile dans laquelle la teneur totale en acide eicosapentaénoïque et en acide docosahexaénoïque dans des acides gras constitutifs de la matière grasse ou de l'huile est supérieure ou égale à 0,1% en masse et inférieure ou égale à 20% en masse, c'est-à-dire, de 0,1 à 20% en masse, par rapport aux acides gras constitutifs totaux de la matière grasse ou de l'huile, de sorte que la teneur en extrait de thym, en extrait de basilic, ou la combinaison de ceux-ci en tant que composant (C1) va de 0,00001 à 0,0025 % en masse, et le rapport massique de teneur entre la teneur en composant (C1) et la teneur en extrait de romarin en tant que composant (B), [(C1)/(B)], va de 0,0003 à 0,08,
ou comprenant le mélange d'au moins l'un, en tant que composant (C2), sélectionné parmi le groupe constitué d'un extrait de clou de girofle, d'un extrait d'origan, et d'un extrait de laurier dans une composition à base de matière grasse ou d'huile contenant l'extrait de romarin en tant que composant (B) dont la teneur va de 0,005 à 0,25 % en masse et contenant, en tant que composant (A), une matière grasse ou une huile dans laquelle la teneur totale en acide eicosapentaénoïque et en acide docosahexaénoïque dans des acides gras constitutifs de la matière grasse ou de l'huile est supérieure ou égale à 0,1 % en masse et inférieure ou égale à 20 % en masse, c'est-à-dire, de 0,1 à 20 % en masse, par rapport aux acides gras constitutifs totaux de la matière grasse ou de l'huile, de sorte que la teneur en au moins l'un, en tant que composant (C2), sélectionné parmi le groupe constitué de l'extrait de clou de girofle, l'extrait d'origan, et l'extrait de laurier va de 0,00001 à 0,001 % en masse, et le rapport massique de teneur entre la teneur en composant (C2) et la teneur en extrait de romarin en tant que composant (B), [(C2)/(B)], va de 0,0001 à 0,03.
